# EUROPEAN PATENT APPLICATION

(11) **EP 4 797 178 A1**
(43) Date of publication of application: **26.08.2026**
(21) Application number: 26159676.1
(22) Date of filing: 19.02.2026
(51) Int. Cl.: G06Q 10/20, G06Q 50/04, G06Q 10/08, G06Q 10/063, G05B 23/02, G07C 3/00

(54) **AGGREGATED DATA PROCESSING FOR INDUSTRIAL PARTS LIFECYCLE MANAGEMENT AND PREDICTIVE MAINTENANCE**

(30) Priority: 20.02.2025 US 202563760986 P
(71) Applicant: Radwell International, LLC, Willingboro, New Jersey 08046 (US)
(72) Inventor: BESSANT, Jason Charles, Willingboro, 08046 (US); BALDWIN, Matthew Mark, Willingboro, 08046 (US); BRANDT, Caleb Jeremy, Willingboro, 08046 (US); CHAPMAN, Catriona, Willingboro, 08046 (US); BRASWELL, Jacob Richard, Willingboro, 08046 (US); BROOKS, Luke Bowers, Willingboro, 08046 (US)
(74) Representative: Forresters IP LLP

(57) **Abstract**

Methods and systems for industrial parts tracking. One system includes an electronic processor configured to execute instructions to perform a set of functions. The set of functions includes receiving condition monitoring information generated via a sensor and associated with a part identifier representing a part installed in a facility, and receiving., through an application programming interface, a data feed including lifecycle information including a lifecycle status for the part identifier. The set of functions further includes accessing inventory information for the part identifier and accessing an alert threshold. The set of functions further includes, based on the condition monitoring information generated via the sensor, the lifecycle information received via the data feed, the inventory information, and the alert threshold, generate and transmit an electronic notification, the electronic notification including a selectable mechanism for accessing, within a consolidated graphical user interface, a list of replacement options for the part.

## Description

### RELATED APPLICATIONS

This application claims priority to U.S. Provisional Application No. 63/760,986, filed February 20, 2025, the entire content of which is incorporated by reference herein.

### FIELD

Examples described herein generally relate to systems and methods for performing a lifecycle analysis and, in particular, systems and methods for executing a portal application for providing continuous (e.g., real-time or near real-time) data updates for industrials parts (e.g., in a manufacturing facility) for, among other purposes, reducing downtime and improving facility production.

### SUMMARY

Examples described herein provide an automation application configured to provide continuous (e.g., real-time or near real-time) end user data updates, proactive notifications, and lifecycle risk assessment in a centralized, interactive application. The application integrates a (e.g., live) lifecycle data feed with remote partner application program interfaces ("APIs") and internal systems for providing continuous (e.g., real-time or near real-time) information and updates. The application generates automated notifications for lifecycle changes, end-of-life risks, alternative availability, or a combination thereof. The application may also generate predictive lifecycle forecasting based on historical trends and manufacturer data. The application may also be configured to allow an end user to perform customer-specific filtering to visualize lifecycle risks in relevant contexts.

The application may be configured to provide proactive obsolescence management by automatically calculating and visualizing obsolescence risk across multiple customer-defined parameters. The application may be configured to generate dynamic dashboards displaying obsolescence risk by, for example, location, process, cabinet, or another filtering parameter. The application may generate customizable risk scores based on installed parts, parts availability, global supply trends, or a combination thereof. The application may be configured to generate heat maps and perform trend analysis to visualize obsolescence impact (e.g., over time). The application may also be configured to automatically prioritize high-risk areas for maintenance planning.

The application may also be configured to reduce parts procurement complexity by automatically matching obsolescence data with (e.g., real-time or near real-time) parts stock, alternative parts, and e-commerce functionality. The application may be configured to generate alternative parts recommendations based on compatibility and replacement complexity (e.g., direct, functional, engineering). The application may integrate an e-commerce application to enable an end user to submit a request for quotes or purchase parts directly within the application. The application may also generate cross-location part transfer suggestions by identifying internal spares before recommending external purchases.

The application may also be configured to reduce unnecessary purchases and improve inventory efficiency by performing automated asset tracking and automated optimization of internal stock systems. The application may track assets across multiple customer sites and may provide (e.g., real-time or near real-time) visibility into installed parts by facility, area, process, cabinet, or another filtering parameter. The application may be configured to perform internal part reallocation by identifying excess stock at one site to fulfill needs at another site. The application may also enable an end user to resell or repurpose obsolete parts internally or externally.

Examples described herein provide an automation application configured to integrate failure trends, lifecycle forecasts, and (e.g., real-time or near real-time) sensor data into a centralized risk assessment platform performing predictive maintenance strategies. The application performs failure trend analysis based on end user-reported failures, repair data, and industry benchmarks. The application may use condition monitoring data collected, for example, using vibration, temperature, and operational sensors to feed (e.g., in real-time or near real-time) data into the application. The application may also perform predictive failure scoring based on historical trends, component lifecycle, and environmental conditions. The application may generate automated maintenance recommendations to reduce downtime and optimize spare part usage.

Accordingly, as described above and below, the application described herein and the functionality implemented via the application (e.g., through the use of the one or more data feeds through a centralized portal or system) reduces downtime in manufacturing facility as compared to existing technologies and approaches (including, for example, manual approaches). Thus, the application and associated functionality described herein provides an improvement in parts management technology by, for example, using data feeds within a centralized application or platform, which results in, not only reduced downtime and improved production at a facility, but makes use of fewer computing and other resources as parts can be monitored and efficiently and effectively maintained and managed within a centralized application or portal that uses aggregated data to initiate actions. The data feeds used by the system may include real-time data feeds, near real-time data feeds, periodic data feeds or updates, or a combination thereof.

"Real-time" and "near real-time" are terms often used in technology and communications to describe the speed at which data is processed and delivered. "Real-time" refers to a system or process that responds and updates immediately or with minimal delay, typically within milliseconds or microseconds. This immediacy allows information to be accessed and acted upon almost instantaneously. As used herein, "real-time" also includes "near real-time," which implies a slight but acceptable delay in data processing and response, such as within seconds or a few minutes. Accordingly, real-time can be contrasted with "batch processing" or "offline processing," wherein data is collected, stored, and processed at a later time.

### BRIEF DESCRIPTION OF THE DRAWINGS

The accompanying figures, where like reference numerals refer to identical or functionally similar elements throughout the separate views, together with the detailed description below, are incorporated in and form part of the specification, and serve to further illustrate examples, examples, and aspects of concepts that include the claimed subject matter and explain various principles and advantages of those examples, examples, and aspects.
FIG. 1 schematically illustrates an automation system according to some examples.
FIG. 2 schematically illustrates a server included in the automation system of FIG. 1 according to some examples.
FIG. 3 schematically illustrates an end user device included in the automation lifecycle system of FIG. 1 according to some examples.
FIG. 4 schematically illustrates a factory server included in the automation lifecycle system of FIG. 1 according to some examples.
FIGS. 5A and 5B illustrate a user interface provided via the automation lifecycle system of FIG. 1 according to some examples.
FIGS. 6A, 6B, 6C, and 6D illustrate a user interface provided via the automation lifecycle system of FIG. 1 for searching parts according to some examples.
FIGS. 7A and 7B illustrate a user interface provided via the automation lifecycle system of FIG. 1 for multi-site parts searching according to some examples.
FIGS. 8A and 8B illustrate a user interface provided via the automation lifecycle system of FIG. 1 for lifecycle change notifications according to some examples.
FIGS. 9A and 9B illustrate a user interface provided via the automation lifecycle system of FIG. 1 displaying a visualization of obsolescence risk according to some examples.
FIGS. 10A, 10B, 10C, and 10D illustrate a user interface provided via the automation lifecycle system of FIG. 1 displaying a process detail overview according to some examples.
FIGS. 11A, 11B, 11C, and 11D illustrate a user interface provided via the automation lifecycle system of FIG. 1 displaying a product detail overview according to some examples.
FIG. 12 is a flowchart illustrating a method performed via the automation lifecycle system of FIG. 1 according to some examples.

Skilled artisans will appreciate that elements in the figures are illustrated for simplicity and clarity and have not necessarily been drawn to scale. For example, the dimensions of some of the elements in the figures may be exaggerated relative to other elements to help to improve understanding of examples, aspects, and features illustrated.

### DETAILED DESCRIPTION OF THE INVENTION

As described above in the summary, examples described herein provide systems and methods for automating lifecycle data updates for risk assessment, interactive data visualization, risk management, asset procurement integration, multi-site asset tracing, and predictive maintenance. Further details of such systems and methods and associated functionality are provided below.

For ease of description, some or all of the example systems presented herein may be described with a single exemplar of each of its component parts. Some examples may not describe or illustrate all components of the systems. Other examples may include more or fewer of each of the illustrated components, may combine some components, or may include additional or alternative components. For example, examples described may represent the system as including a single server, a single end user device, and a single provider device, but it should be understood that systems may include multiple servers (or other types of devices, such as, for example, one or more databases), multiple end user devices, multiple provider devices, or a combination thereof. Also, although not explicitly described, the components of these systems may communicate through various intermediary devices (e.g., routers, firewalls, modems, etc.).

It should be understood that examples described herein may be configured in various combinations of hardware and software (including firmware) and functionality implemented via software may be distributed and combined in various applications or modules executed by one or more electronic processors. For example, instead of being executed by a single electronic processor, processing may be distributed among multiple electronic processors, which may be located in the same piece of hardware or separate devices. The devices included in the system may communicate over one or more networks, connections, or other suitable communication links.

It should also be understood that, while some examples are described herein with respect to obsolescence management for industrial automation, the systems and methods described may be applied to different types of industries and usage and are not limited to industrial automation.

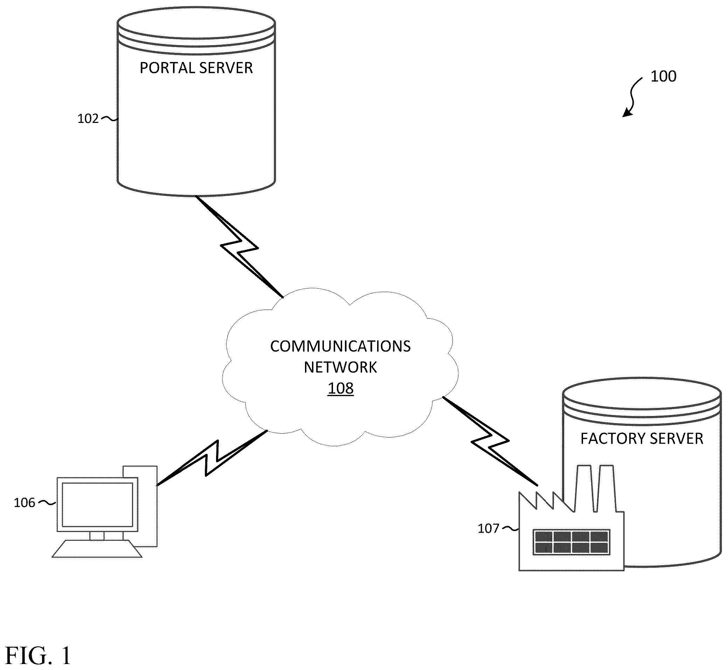

FIG. 1 schematically illustrates an automation system 100 according to some examples. As described in more detail below, the automation system 100 is configured to, among other things, monitor, operate, and maintain physical assets in an industrial setting, such as, for example, manufacturing, automotive, or food processing, wherein the system 100 provides insights into obsolescence risks of assets (e.g., parts for a manufacturing facility). As illustrated, the system 100 includes a portal server 102, a factory server 107, and an electronic communication device 106, wherein an electronic communication device 106 may also be referred to herein as a user or end user device and may be used by an end user. The system 100 may include additional components than those illustrated. For example, although FIG. 1 illustrates only one communication device 106 and only one factory server 107, the system 100 may include additional communications devices. As another example, the functionality described herein as being performed via the portal server 102 may be distributed among multiple servers, databases, or the like. For example, in some examples, the system 100 is provided as a cloud-based system or platform and, in some examples, the server 102, the device communication device 106, or both may be configured to access one or more databases, such as, for example, one or more databases of the portal server 102, the factory server 107, and/or an asset manufacturer. These databases may be used to obtain asset production data of an asset manufacturer, factory data of the factory server 107, inventory data, or a combination thereof.

As illustrated, the electronic communication device 106 and the factory server 107 are communicatively connected (via a suitable wired or wireless connection or some combination thereof) to the portal server 102 via a communications network 108. The communications network 108 may be implemented via one or more wired connections, wireless connections, or a combination thereof. In some examples, the communications network 108 includes a wireless communications network, which may be implemented various local and wide area networks, for example, a Bluetooth^{™} network or a Wi-Fi^{™} network, the Internet, or combinations or derivatives thereof. The communications network 108 provides secure data transfers between the portal server 102, the electronic communication device 106, the factory server 107, and third-party servers (not shown). The portal server 102 may include one or more physical server computer systems, virtual private servers (VPSs), (for example, a cloud-based server), and the like. The portal server 102 hosts a software application, which is accessible to one or more remote computing devices (for example, the electronic communication device 106) via, in some examples, a web browser. In some examples, the portal server 102 and the electronic communication device 106 execute the application in a shared fashion (for example, in a client-server arrangement). In further examples, the electronic communication device 106 may store and implement a local, dedicated application for accessing and communicating with the portal server 102. As noted above, in some examples, the portal server 102 is part of a cloud-based server network. Accordingly, it should be understood that functionality described herein as being performed via the portal application may be performed by the portal server 102 (e.g., and accessible via the electronic communication device 106 via a web-browser or a dedicated application), the electronic communication device 106, or a combination thereof.

The factory server 107 may include one or more physical server computer systems, virtual private servers (VPSs), (for example, a cloud-based server), and the like. The factory server 107 may store and implement a local, dedicated application for allowing the portal server 102 to access and communicate with the factory server 107. In some examples, the functionality described herein as being performed via the factory server 107 may be distributed among multiple servers, databases, or the like. For example, in some examples, the system 100 or portions thereof may be provided as a cloud-based system or platform. In some examples, the factory server 107 includes databases having factory data, such as, for example, factory stock information and parts information, related to one or more factory devices. In those examples, for example, the factory devices may include any physical asset including machinery, tools, facilities, infrastructure, or any other asset that affects the production and manufacturing processes of an operation.

The electronic communication device 106 may be any electronic computing device capable of implementing the portal application or associated functionality as described herein. The electronic communication device 106 may be, for example, a computer, a laptop, an electronic tablet, a cellular (smart) phone, a smart wearable, and the like.

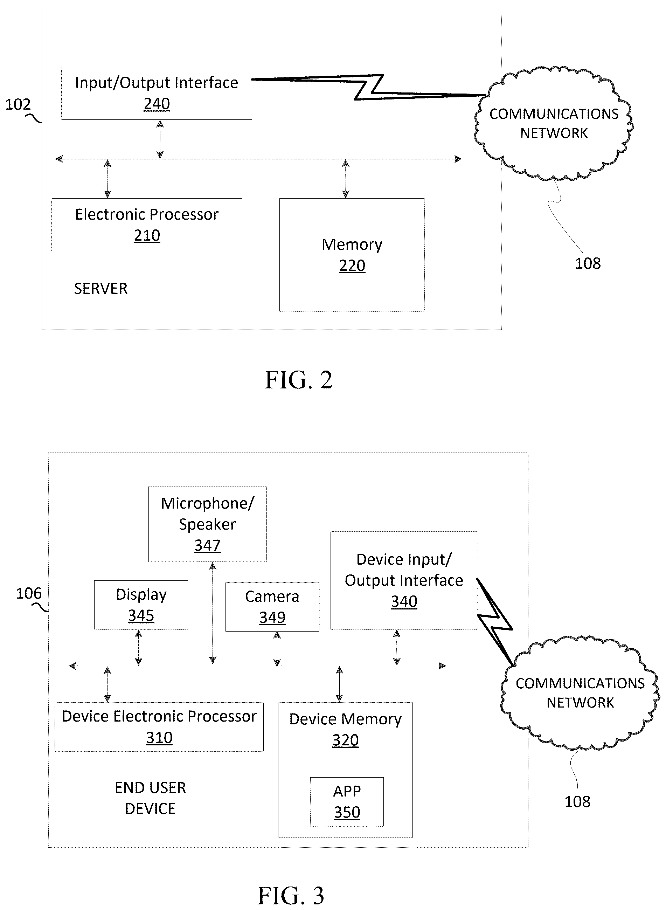

The electronic communication device 106, described in more detail below, is configured to execute a portal application to, among other things, access asset production data, factory data, inventory data, provided via the system 100 and generate one or more user interfaces for providing insights into obsolescence risks of assets of the factory server 107 to a user of the electronic communication device 106 as described herein. Accordingly, as also described in more detail below, the electronic communication device 106 may include a display (for example, a touchscreen) for providing one or more user interfaces and, optionally, receiving input from a user during a part search (e.g., through the touchscreen, a button or keypad, a microphone, or the like). FIG. 2 schematically illustrates one example of the portal server 102 in accordance with some examples. In the example illustrated, the portal server 102 includes an electronic processor 210, a memory 220, and an input/output (I/O) interface 240. The electronic processor 210, the memory 220, and the input/output interface 240 communicate over one or more control and/or data buses (e.g., a communication bus). It should be understood that FIG. 2 illustrates only one example of the portal server 102, and the portal server 102 may include additional or fewer components and may perform functions other than those explicitly described herein.

In some instances, the electronic processor 210 is implemented as a microprocessor with separate memory, such as the memory 220. In other instances, the electronic processor 210 may be implemented as a microcontroller (with memory 220 on the same chip). In other instances, the electronic processor 210 may be implemented using multiple processors. In addition, the electronic processor 210 may be implemented partially or entirely as, for example, a field-programmable gate array (FPGA), and application specific integrated circuit (ASIC), and the like and the memory 220 may not be needed or be modified accordingly. In the example illustrated, the memory 220 includes non-transitory, computer-readable memory that stores instructions that are received and executed by the electronic processor 210 to carry out functionality of the system 100 as described herein (or portions thereof). The memory 220 may include, for example, a program storage area and a data storage area. The program storage area and the data storage area may include combinations of different types of memory, such as read-only memory and random-access memory.

The I/O interface 240 may include one or more ports (e.g., for receiving one or more wired cables or connections), transceivers, transmitters, receivers, or a combination thereof for communication with one or more devices or networks external to the portal server 102, such as, for example, the electronic communication device 106.

FIG. 3 schematically illustrates an electronic communication device 106 according to some examples. In the particular example illustrated, the electronic communication device 106 includes, among other things, a device electronic processor 310, a device memory 320, and a device input/output (I/O) interface 340. The device electronic processor 310, the device memory 320, and the device I/O interface 340 communicate over one or more control and/or data buses (e.g., a device communication bus). FIG. 3 illustrates only one example of the electronic communication device 106, and the electronic communication device 106 may include more or fewer components than illustrated and may perform additional functions other than those described herein.

The device electronic processor 310 may be implemented in various ways including ways that are similar to those described above with respect to the electronic processor 210. Likewise, the device memory 320 may be implemented in various ways including ways that are similar to those described with the respect to the memory 220. The device memory 320 may store instructions that are received and executed by the device electronic processor 310 to carry out at least a portion of the functionality described herein. For example, as illustrated in FIG. 3, in some examples, the memory 330 stores a portal application (or "app") 350 that, when executed by the device electronic processor 310 performs the functionality described herein or a portion thereof.

The device I/O interface 340 enables communication (e.g., wired, wireless, or a combination thereof) from the electronic communications device 106 to, for example, the portal server 102 via the communications network 108 similar to the I/O interface 240 described above with respect to FIG. 2.

As illustrated in FIG. 3, in some examples, the electronic communication device 106 includes one or more human machine interfaces (HMI) for providing output to and receiving input from a user of the electronic communication device 106. For example, the electronic communication device 106 may include a display 345, a microphone/speaker 347, and a camera 349. These components may be combined and distributed in various combinations. For example, in some examples, the microphone/speaker 347 may be provided as separate components and, in some examples, one or both of these components may be integrated with the camera. It should be understood that the electronic communication device 106 may include additional input devices, output devices, or a combination thereof, such as, for example, a keypad, a keyboard, a button, a knob, a dial, one or more LEDs, a printer, a vibration motor (for providing tactile output), or a combination thereof.

The display 345 is a suitable display such as, for example, a liquid crystal display (LCD) touch screen, or an organic light-emitting diode (OLED) touch screen. In some instances, the electronic communication device 106 implements a graphical user interface (GUI) (e.g., generated by the electronic processor 310, from instructions and data stored in the memory 320, and presented on the display 345), that enables a user to interact with the electronic communication device 106.

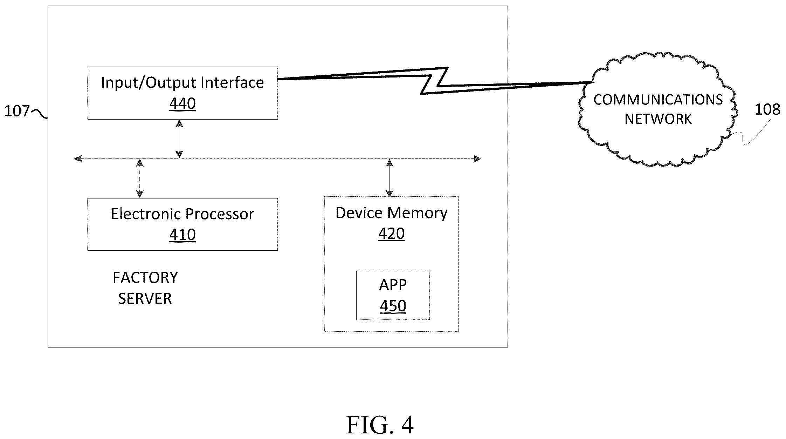

FIG. 4 schematically illustrates one example of the factory server 107 in accordance with some examples. In the example illustrated, the factory server 107 includes a factory electronic processor 410, a memory 420, and an input/output (I/O) interface 440. The electronic processor 410, the memory 420, and the input/output interface 440 communicate over one or more control and/or data buses (e.g., a communication bus). It should be understood that FIG. 4 illustrates only one example of the factory server 107, and the factory server 107 may include additional or fewer components and may perform functions other than those explicitly described herein.

The factory electronic processor 410 may be implemented in various ways including ways that are similar to those described above with respect to the electronic processor 210. Likewise, the memory 420 may be implemented in various ways including ways that are similar to those described with the respect to the memory 220. The memory 420 may store instructions that are received and executed by the factory electronic processor 410 to carry out at least portion of the functionality described herein. For example, as illustrated in FIG. 4, in some examples, the memory 430 stores a software application (or "app") 450 that, when executed by the factory electronic processor 410, communicates with the portal server 102 as described herein (e.g., to provide condition monitoring data, part or asset data, or the like). Alternatively or in addition, the memory 430 may store the portal application described herein, which may allow users at the factory to use the portal application (e.g., as an end user) as described herein.

The I/O interface 440 may include one or more ports (e.g., for receiving one or more wired cables or connections), transceivers, transmitters, receivers, or a combination thereof for communication with one or more devices or networks external to the factory server 107, such as, for example, the portal server 102, factory assets, or the like.

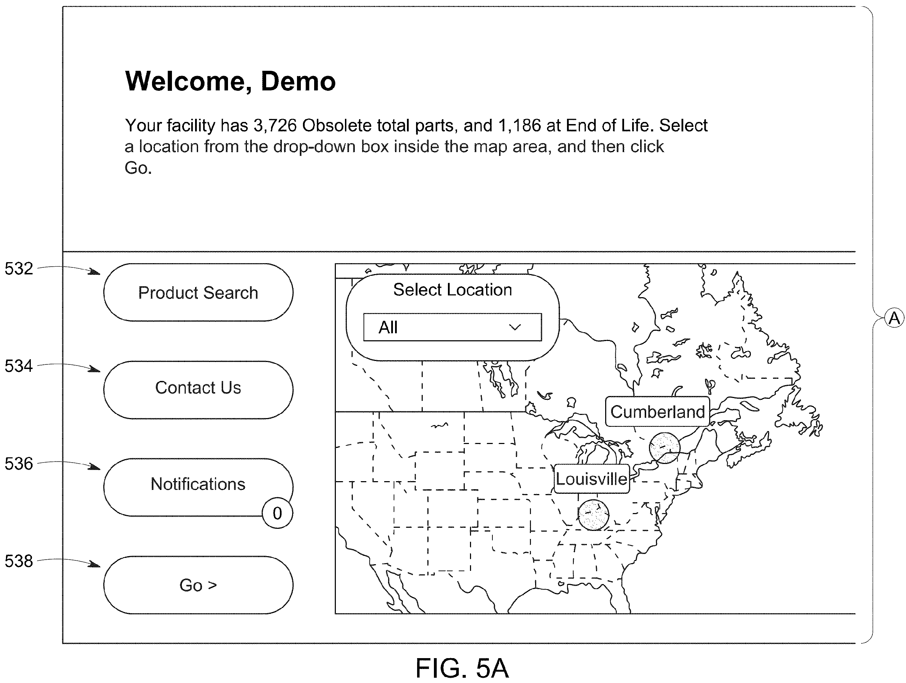

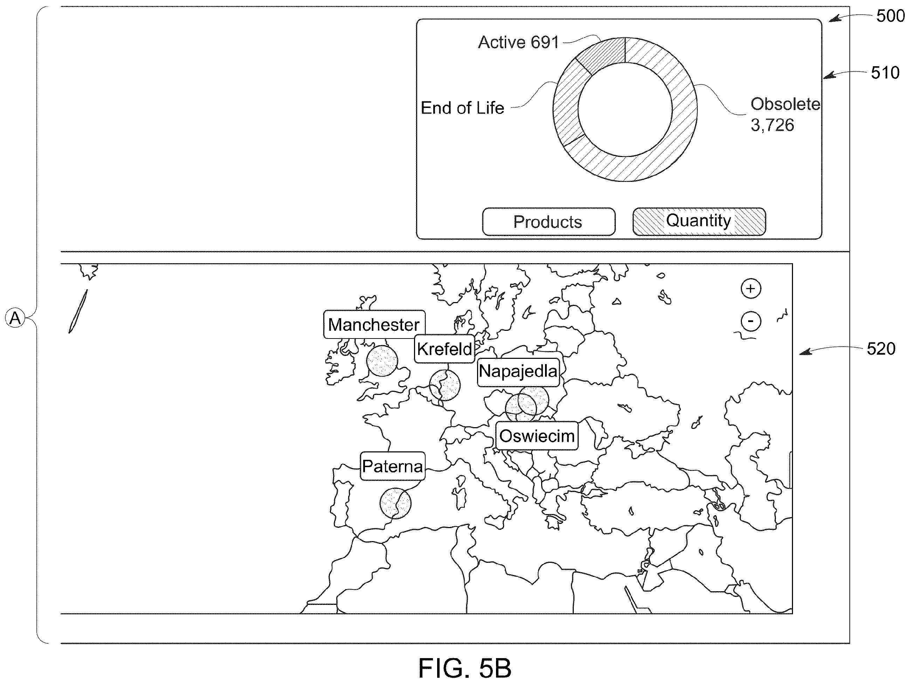

As described above, the system 100 may be used by end users, who may operate an electronic communication device 106 to access and interact with the system 100 (e.g., the portal server 102 and, in particular, various user interfaces provided via the server 102). In some examples, an end user may download a dedicated application to manage assets across one or more locations. Alternatively or in addition, an end user may access a web site or web service associated with the system 100 that allows the end user to develop, operate, maintain, upgrade, and dispose of assets in an cost-effective manner. As illustrated in FIGS. 5-11, the system 100 provides one or more user interfaces for providing data and receiving inputs for, among other things, tailoring lifecycle risk assessments of assets and proactive notifications. In some examples, the system 100 calculates and visualizes obsolescence risk across multiple user-defined parameters to proactively manage obsolescence of assets. In some examples, the system 100 utilizes obsolescence data with real-time or near real-time stock information, alternative parts information, and e-commerce functionality to reduce procurement complexity. In other examples, the system 100 provides multi-site asset tracking and internal stock optimization systems. In yet another example, the system 100 integrates failure trends, lifecycle forecasts, and (e.g., real-time or near real-time) sensor data into a centralized risk assessment platform, enabling predictive maintenance strategies.

In some examples, the system 100 also provides in-depth analytics and reporting, such as, for example, one or more user interfaces like user interface 500 presented in FIGS. 5A and 5B. The user interface 500 illustrated in FIGS. 5A and 5B includes a chart 510, an interactive map 520, and navigation buttons 532-538. The system 100 retrieves the information displayed in the user interface 500, such as, lifecycle status, site locations, and interactive map elements, from one or more databases (e.g., stored in the memory 220 of the portal server 102). In some instances, the system 100 collects data, such as, customer-installed base data (e.g., installed sensors, installed parts, installed assets), part lifecycle status, and site details, and stores the collected data in the one or more databases. In some implementations, the system 100 processes the collected data to create additional data, such as, for example, future obsolescence forecasts based on data collected via a third-party server (not shown).

The user interface 500 displays an identifier associated with the end user and the interactive map 520 includes one or more site locations associated with the end user. The system 100 utilizes the identifier to authenticate the end user and determine a profile for the end user. The system 100 utilizes the predetermined profile of the end user to determine the locations/sites/parts the end user is allowed to access through the system 100. In some implementations, the memory 220 of the portal server 102 includes a User Table linking end users to specific sites and installed base data, ensuring each end user only sees relevant and authorized information. For example, the system 100 may associate an identifier (e.g., a Customer ID) with each end user in the User Table and link the identifier with respective company locations and parts data (e.g., stored in one or more databases). The one or more site locations of the interactive map 520 are selectable, for example, via the interactive map 520 or a drop-down menu including a list of the site locations.

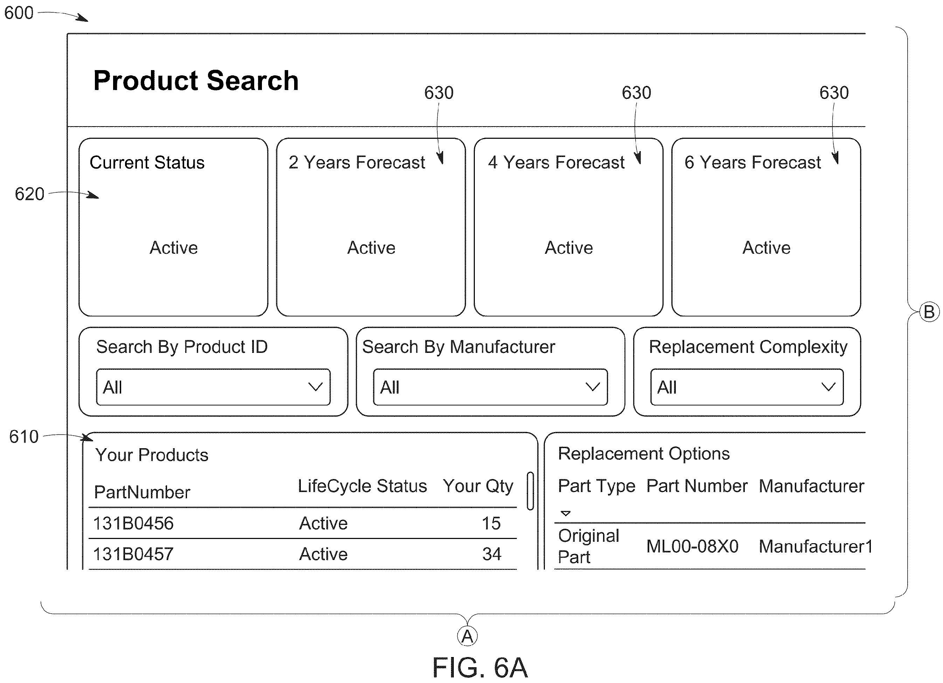

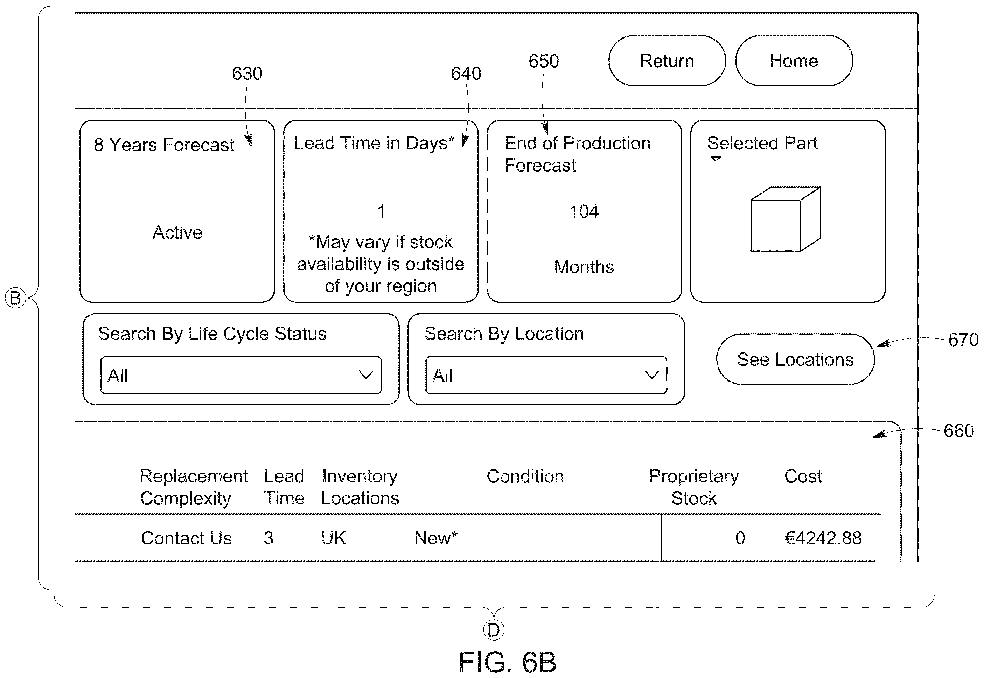

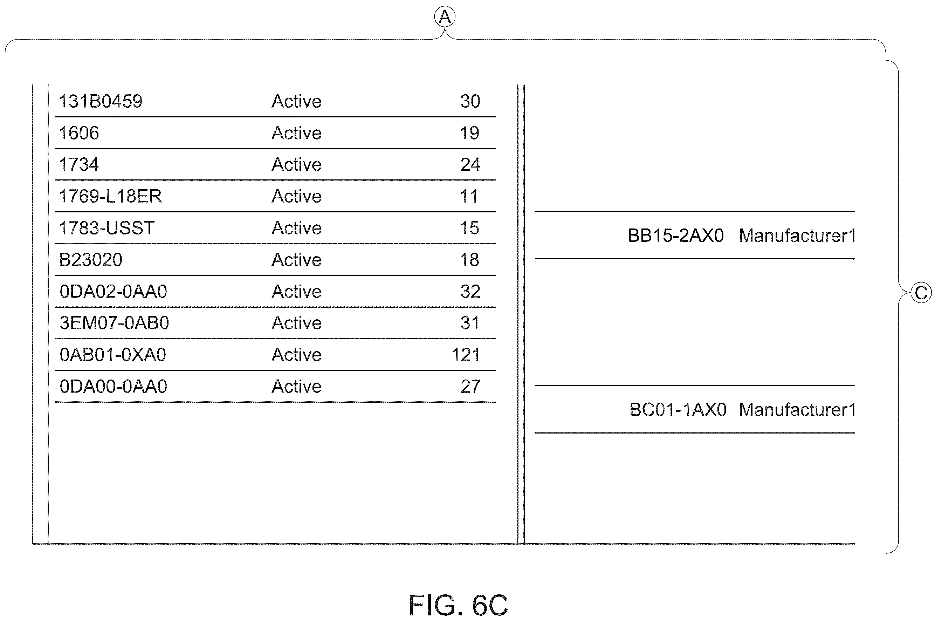

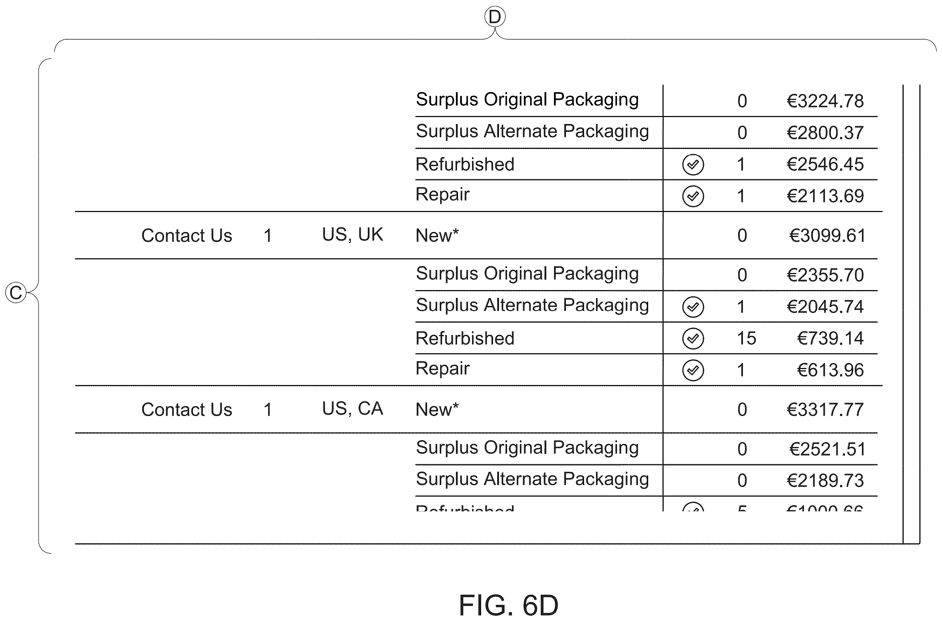

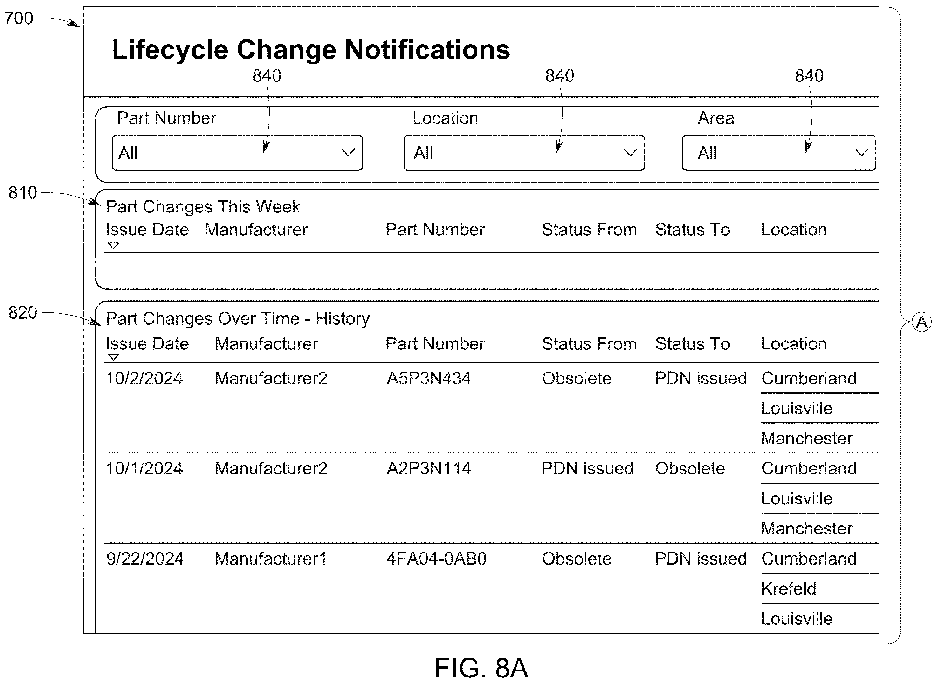

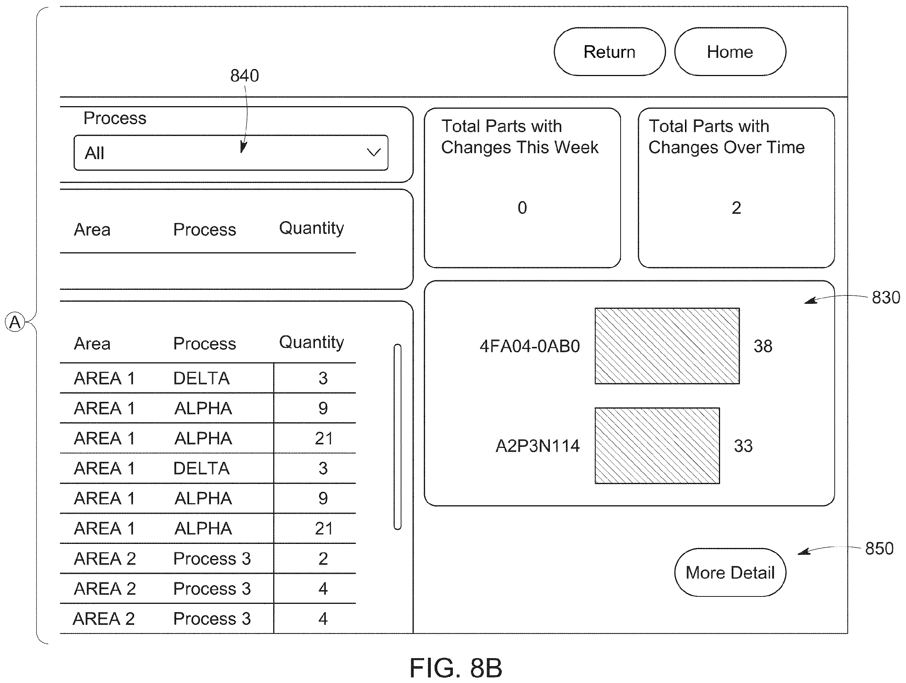

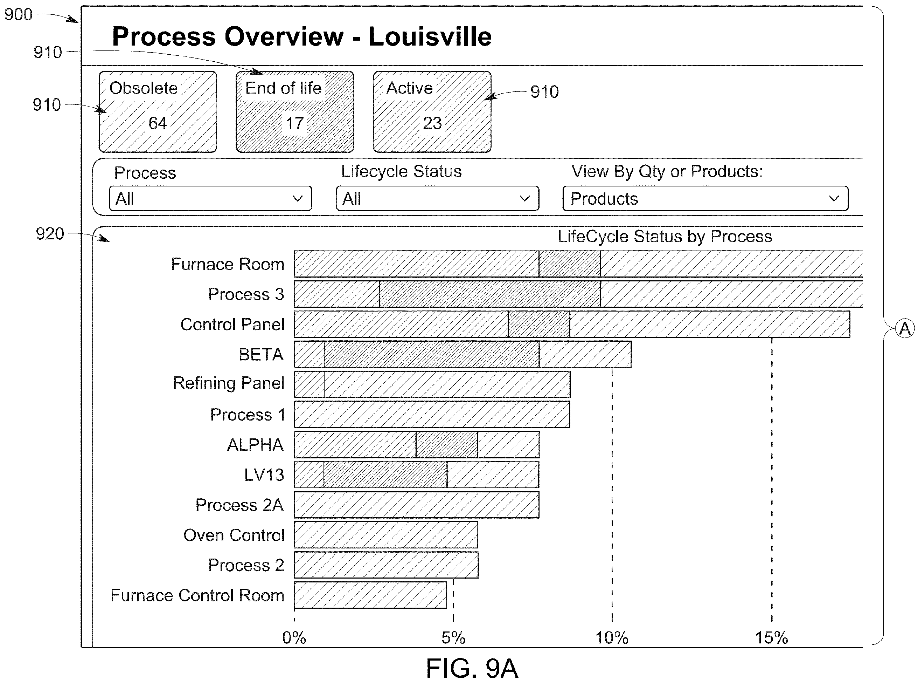

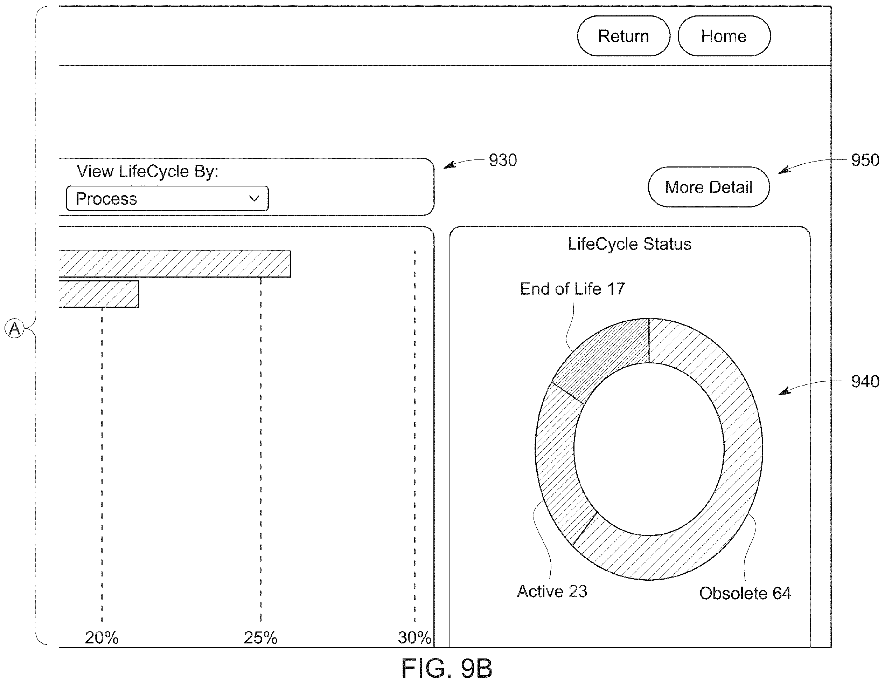

The chart 510 depicts a lifecycle status breakdown (e.g., Active, End-of-Life, Obsolete) for assets of the selected locations in the interactive map 520. The chart 510 dynamically updates the lifecycle status breakdown based on the selected site location or a combination of multiple locations. The chart 510 may also dynamically update the lifecycle status breakdown based on a total count of parts (e.g., quantity) or part types (e.g., products). The product search button 532 initiates a search for parts across all site locations of the interactive map 520 via a user interface (e.g., a product search user interface 600 illustrated in FIGS. 6A, 6B, 6C, and 6D). The contact us button 534 initiates contact with administrators of the portal server 102. The notifications button 536 provides access to settings for lifecycle updates and other alerts via a user interface (e.g., a lifecycle change user interface 800 illustrated in FIGS. 8A and 8B). The go button 538 displays a lifecycle status breakdown of specific locations or a selection of multiple locations via a user interface (e.g., a process overview user interface 900 illustrated in FIGS. 9A and 9B).

In some examples, the portal server 102 retrieves/receives (e.g., via one or more real-time data feeds, near real-time data feeds, periodic data feeds or updates, or a combination thereof) server-side data and client-side data (e.g., end user inputs) via input/output interface 240 and/or the memory 220 and processes the server-side and client-side data. The portal server 102 may continuously update the server-side and client-side data by storing, for example, data feeds (e.g., real-time or near real-time feeds) in the memory 220 and providing centralized access to the server-side and client-side data stored in the memory 220 for lifecycle, pricing, regulations, and stock data. For example, the server-side data can include parts lifecycle information, parts pricing and availability information, stock level information, alternative parts matching information, global regulations information, and combinations thereof. The portal server 102 may obtain, via the communications network 108, from a manufacturer of parts, the parts lifecycle information, which includes end-of-production dates, lifecycle status of a part such as, for example, a part is being manufactured (e.g., active), reaching end-of-life (e.g., no longer sold or renewed, but may still receive some support), obsolete (e.g., parts are no longer available or supported by the manufacturer), or forecasted obsolescence risks (e.g., 2, 4, 6, 8 years). The parts pricing and availability information may be aggregated across multiple regions and inventory conditions, such as, new, surplus (Manufacturer Packaging), Surplus (Client Packaging), refurbished, or repairable. Pricing information may be available in multiple currencies.

In some examples, the portal server 102 also receives client-side data via input/output interface 240. For example, the client-side data (e.g., client asset data) can include installed base data, end user stock level information, and condition monitoring information. The installed base data is client asset data including part locations (e.g., factories, production lines, control cabinets, panels) and associated automation systems (e.g., programmable logic controller ("PLCs"), human-machine interfaces ("HMIs"), drives, safety systems). The stock level information includes parts inventory data, for example, spare parts, for one or more client site locations. The condition monitoring information includes sensor data (e.g., temperature, vibration, cycle counts, failure rates) of assets. The system 100 can utilize the condition monitoring information to predict part failure risks.

In some implementations, the portal server 102 continuously updates the sever-side data and client-side data (e.g., as stored in the memory 220) to provide (e.g., real-time or near real-time) visibility into lifecycle risks, pricing fluctuations, and stock shortages. The portal server 102 also provides automated risk scoring based on part availability and obsolescence timelines. The portal server 102 can further provide centralized data distribution ensuring all users access the latest, validated data without delay. In some implementations, the portal server 102 utilizes machine learning techniques to determine failure prediction based on historical failures and condition monitoring information and improve maintenance planning. In some implementations, the portal server 102 provides automated threshold alerts, set by the end user, for stock replenishment, lifecycle risks, or regulatory changes based on the server-side data. In some implementations, the portal server 102 is configured with direct connections with client-side systems for seamless spare parts management.

The client-side data may also be collected via various manual and/or automated processes and collected data may entered via one or more user interfaces and/or uploaded as a file or data object with a particular format or structure. For example, parts at a particular location may be recorded, scanned, photographed, or the like to create a list of parts. The list of parts includes a manufacturer, part number, quantity installed, location, process, electrical panel reference for each part. In another example, parts at a particular location may be recorded in a pre-formatted file. In some examples, the system 100 provides such user interfaces and/or upload tools for receiving such information. The system 100 processes and standardizes the collected data prior to integration of the collected data with previously collected data of a database stored in the memory 220 of the portal server 102. The system 100 can match fields of the uploaded file or data object with the existing database structure stored in the memory 220. The system 100 validates the collected data by identifying errors, such as, for example, incorrect part numbers, missing manufacturers, or the like. The system 100 cleans and standardizes the collected data. For example, the system 100 standardizes naming conventions of manufacturers (e.g., "The Parts Store" vs. "TPS "). In this example, the system 100 also verifies the part numbers of the collected data align with obsolescence data stored in the memory 220. In some instances, the system 100 also identifies duplicate records and/or conflicting part details in the collected data. In those instances, the system 100 flags the records and/or parts for review. In some implementations, the system 100 verifies collected data provided by an end user via the communication device 106. For example, all uploaded files or data objects received from the communication device 106 are stored in verification database in the memory 220 for review by administrators.

In some examples, the product search user interface 600 illustrated in FIGS. 6A, 6B, 6C, and 6D presents search and/or filter settings for parts across one or more site locations by product ID, manufacturer, replacement complexity, lifecycle status, site location, or combination thereof. The product search user interface 600 includes an end user products section 610, a lifecycle status 620, lifecycle forecasts 630, a lead time status 640, an end-of production forecast 650, a replacement options section 660, and a see locations button 670.

The end user products section 610 includes a list of parts located at the one or more site locations and information (e.g., part number, lifecycle status, and quantity) related to each part. The lifecycle status 620 indicates a lifecycle (e.g., active, end-of-life, obsolete) of a selected part of the end user products section 610. The lifecycle forecasts 630 indicates a predicted lifecycle of the selected part of the end user products section 610. For example, the portal server 102 determines a lifecycle status for the selected part of the end user products section 610 for future time periods, such as, for example, 2, 4, 6, and 8-year time periods, based on data received from a manufacturer of the selected part (e.g., as part of a received data feed). The lead time status 640 indicates an estimation of an overall duration or interval from processing an order until the order is received. For example, the portal server 102 determines a lead time for the selected part of the end user products section 610 based on data received from a manufacturer of the selected part and/or a delivery location for the selected part. The end-of-production forecast 650 indicates a time when a manufacturer no longer produces the selected part of the end user products section 610. For example, the portal server 102 determines end-of-production status for the selected part of the end user products section 610 based on data received/retrieved from a manufacturer of the selected part. The replacement options section 660 displays replacement parts information for the selected part of the end user products section 610 supplemented with updated server-side data, such as, for example, inventory locations, condition codes, stock levels, pricing, and replacement complexity of alternative parts. The system 100 supplements the replacement parts information with upgrade or migration paths information for products provided by the manufacturer and/or stock information of administrators. As the replacement options section 660 includes multiple options associated with multiple sources and/or solutions, the replacement options section 660 provides a consolidated user interface for investigating (and optionally purchasing) replacement options. In other words, rather than wasting time and computing resources accessing other systems and services to identify and procure (without introducing human error or delay) replacement options, the replacement options section 660 creates efficiencies and accuracies through the use of a centralized system.

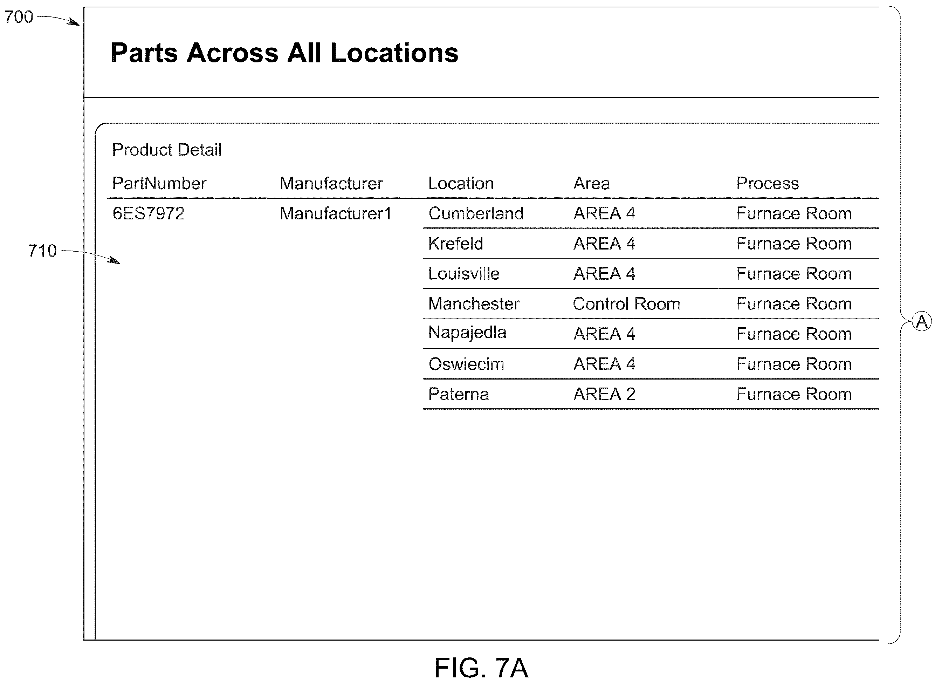

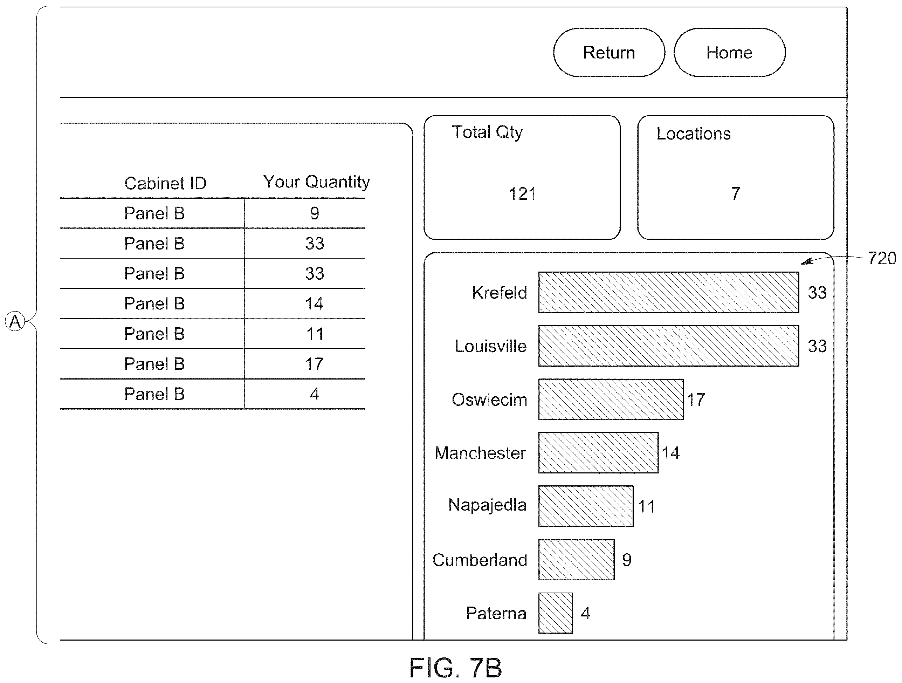

The see locations button 670, when selected, presents options for searching for a selected part of the end user products section 610 across multiple (e.g., all) site locations via a user interface (e.g., an all-locations user interface 700 illustrated in FIGS. 7A and 7B). In some examples, the system 100 includes or interacts with an e-commerce system, and the product search user interface 600 allows selected parts to be added to a shopping cart and/or a request for quotes ("RFQs") to be submitted, via the e-commerce system, directly through the portal application 350. For example, a shopping cart of the e-commerce system may be integrated with inventory data, such as, pricing across various conditions (e.g., new, surplus, refurbished, or repair), stock availability by location, and/or replacement options and complexities, of a database of the portal server 102. The e-commerce system can provide the system 100 with real-time or near real-time pricing and stock updates, and instant confirmation and tracking for purchases (e.g., as the end user is not forced to manually navigate to a completely separate system/portal). In addition, the e-commerce system may provide one or more interfaces for searching and filtering parts for quick addition to the shopping cart, saving carts for future use or bulk purchasing, and modification of quantities or removal of items. Furthermore, the e-commerce system may provide selectable or fillable options for configuring customized alerts for low stock or obsolescence risks related to shopping cart items.

In some examples, the all-locations user interface 700 illustrated in FIGS. 7A and 7B provides detailed insights into the selected part from the product search user interface 600 of FIGS. 6A, 6B, 6C, and 6D. The all-locations user interface 700 includes a part details section 710 and an inventory overview section 720. The part details section 710 includes the selected part along with the manufacturer, the locations where the selected part is installed, a location area within the facility, a process the selected part supports, cabinets housing the selected part, and quantity of the selected part for each location. The inventory overview section 720 includes a total quantity of the selected part across one or more multiple locations, a number of locations, and a chart displaying selected part totals for each individual location. The all-locations user interface 700 provides evaluation tools for evaluating a potential risk associated with the selected part across multiple locations. The all-locations user interface 700 also supports planning for migration or upgrades by providing a comprehensive overview of part usage. In addition, the all-locations user interface 700 facilitates decisions on reallocating spare parts from one location to another. In some examples, the system 100 leverages a large database (e.g., stored in the memory 220) of stock-keeping units (SKUs) or other unique part codes/identifiers (e.g., more than 30 million) and an extensive network of distribution lines (e.g., over 20,000) to extend post-obsolescence availability via aggregated sources. In other words, the system 100 does not just forecast risks, but it actively sources and matches replacements using an internal inventory of new parts, new surplus parts, surplus parts (e.g., in non-original packaging), refurbished parts, or a combination thereof, one or more third-party partners, or a combination thereof to extend the life of a part beyond original equipment manufacturer (OEM) discontinuation. Accordingly, as compared to other obsolescence tools and technologies that focus on alerts, forecasts, and/or prioritization, the system 100 provides a list of replacement options in the consolidated graphical user interface that includes options sourced from an extensive proprietary inventory across thousands of distribution lines, encompassing new, new surplus, surplus in non-original packaging, and refurbished conditions, which extends availability of a part beyond its manufacturer-declared obsolete status. The system 100 leverages this proprietary inventory to aggregate and present replacement options in multiple conditions (new, surplus, refurbished, etc.), enabling users to maintain operations post-obsolescence without forced migrations dictated by manufacturers. The system 100 provides lifecycle forecasts integrated with availability data to support user-timed upgrade planning, including cost comparisons across sourcing options and conditions. In addition, through the consolidated graphical user interface, lifecycle needs (forecasts, risks, sourcing from vast inventory, API-fed obsolescence data, replacement matching) converge in one interface, which reduces fragmentation and provide end-to-end lifecycle management.

In some examples, the system 100 includes an asset recovery program for managing surplus and decommissioned stock. For example, the system 100 may provide one or more user interfaces or configurable settings for adding or identifying unwanted stock or equipment (e.g., replaced during upgrades) into a database of the portal server 102. In this example, the user interface provided via the system 100 receives one or more uploads of part details, including part numbers, quantities, and condition descriptions, wherein the portal server 102 stores the uploaded information and presents the uploaded information (e.g., through one or more user interfaces) for providing offers to administrators of the portal server 102 through the portal application 350. The portal application 350 may also be configured to automatically (e.g., through application of one or more configurable settings) accept offers and/or negotiate offers (and/or present offers for approval and/or negotiation to end users), wherein offers may be associated with portal credits or direct payment within the portal application 350. The user interface of the portal application 350 may also include a dashboard for tracking the status of submitted items, such as, pending reviews, approved items and their valuations, and items declined with reasons provided.

In some examples, the lifecycle change user interface 800 illustrated in FIGS. 8A and 8B enables an end user to track and understand lifecycle changes in assets over time. The lifecycle change user interface 800 includes a recent changes section 810, a historical changes section 820, a change summary section 830, filters 840, and a more details button 850. The recent changes section 810 includes information related to part lifecycle changes within a (e.g., user) defined time period. The information may include part lifecycle status transitions (e.g., from and to), areas, processes, quantities, and cabinet locations for all affected parts. The historical changes section 820 includes information related to all part lifecycle changes for the entire change history, and the information may be similar to the information discussed with respect to the recent changes section 810. The change summary section 830 includes a total quantity of recent part lifecycle changes and historical part lifecycle changes and a chart displaying total quantity of recent part lifecycle changes and historical part lifecycle changes. The filters 840 allow an end user to filter lifecycle part changes by part number, location, area, process, and quantity. The more details button 850 allows an end user to access additional information for the selected part of the lifecycle change user interface 800.

In some examples, the system 100 provides an asset change notification program. The asset change notification program can include, for example, an email notification program, although other types of notifications may be generated by the system 100 (e.g., text messages, in-app notifications, chat or instant messages, voice messages, or the like). In some instances, the system 100 (e.g., the portal server 102) generates and transmits an email alert to the electronic communication device 105, wherein the email notification corresponds to, for example, changes in lifecycle of one or more parts (e.g., assets), such as, transitioning between active, end-of-life, and/or obsolete statuses, and portal inventory reaching a threshold level (e.g., low stock or no stock) for critical parts of an end user facility. In addition, in some examples, the system 100 provides one or more user interfaces for customizing, via the portal application 350, the frequency and threshold levels for notifications (e.g., when inventory is considered "low," parts considered "critical," threshold numbers or percentages of individual lifecycle status, etc.). These configurations can be stored as part of an end user profile. The asset change notification program can also include, for example, a portal inventory alert program including a dedicated user interface for monitoring portal inventory. For example, the system 100 transmits an alert, via the application 350, to an end user highlighting a risk to the availability of a part installed across multiple facilities and processes affected the portal stock falls below a threshold level. In some instances, the system 100 transmits a notification through the system 100 itself by, for example, triggering an alert, banner, icon, message, etc. within the portal application 350. The notification can include low stock alerts (e.g., visual indicators for parts nearing depletion) and/or no stock notifications (e.g., highlighting parts that are unavailable and may require alternative sourcing or replacements). These notifications can similarly be customized via one or more user interfaces and/or user profiles provided via the system 100 (e.g., setting threshold levels for the notifications).

In some examples, the process overview user interface 900 illustrated in FIGS. 9A and 9B provides a visualization of obsolescence risk. The process overview user interface 900 includes a risk summary section 910, a lifecycle status process chart 920, filters 930, a lifecycle chart 940, and a more details button 950. The risk summary section 910 includes a count of the number of unique parts or total quantities categorized by lifecycle status (e.g., active, end of life, and obsolete).

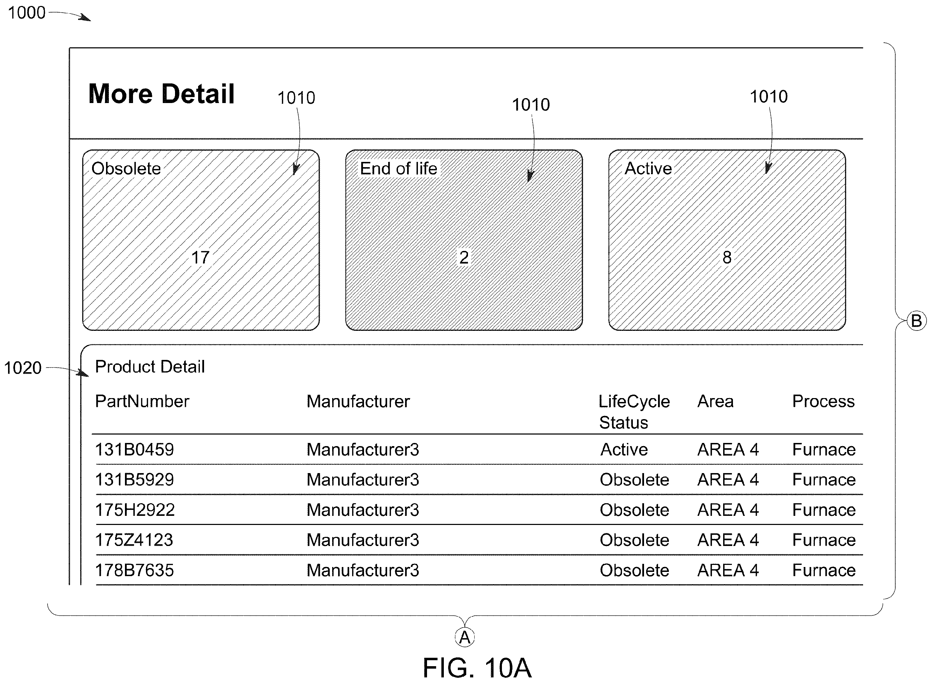

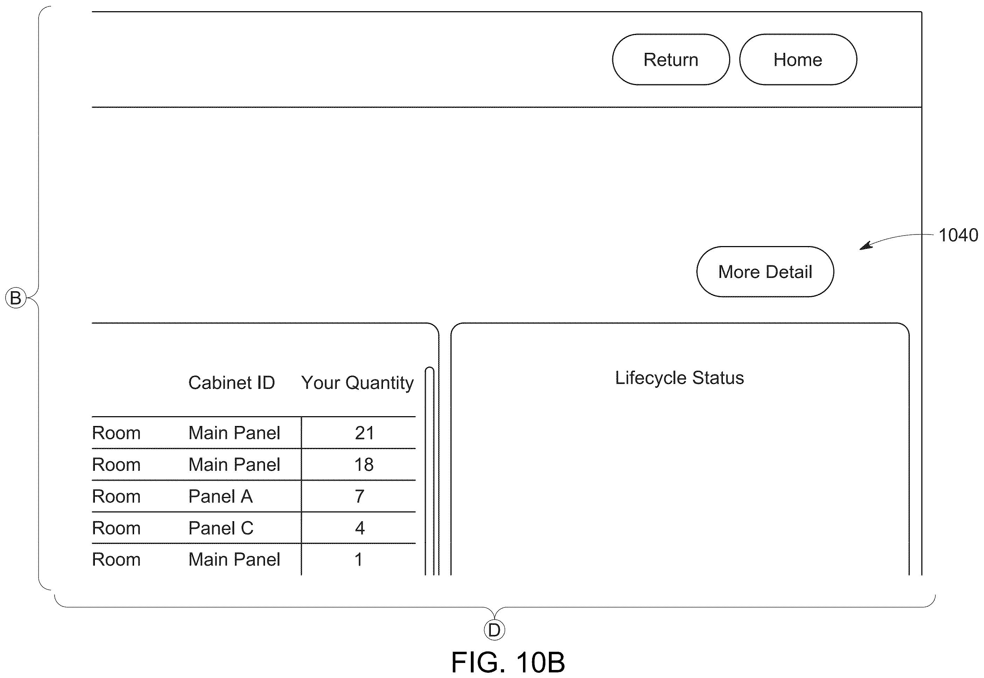

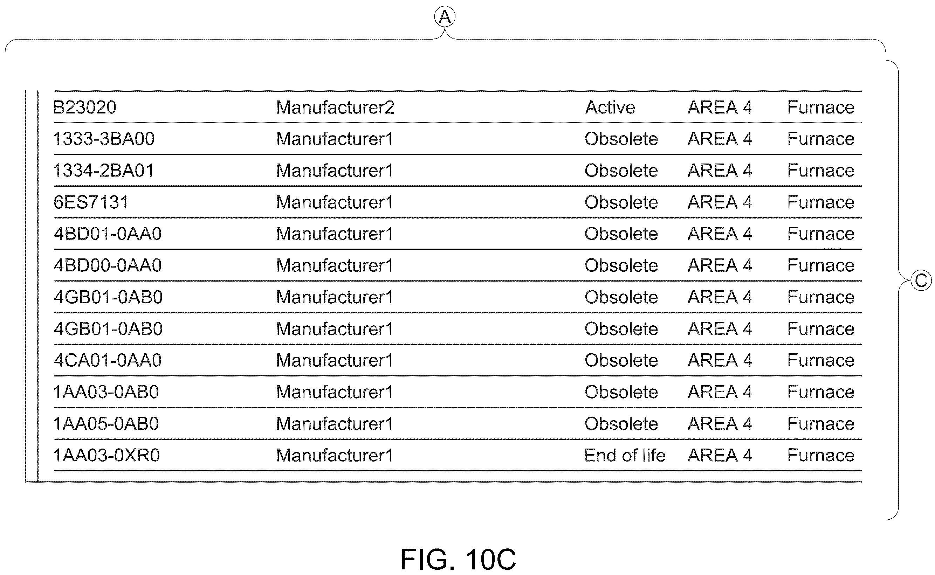

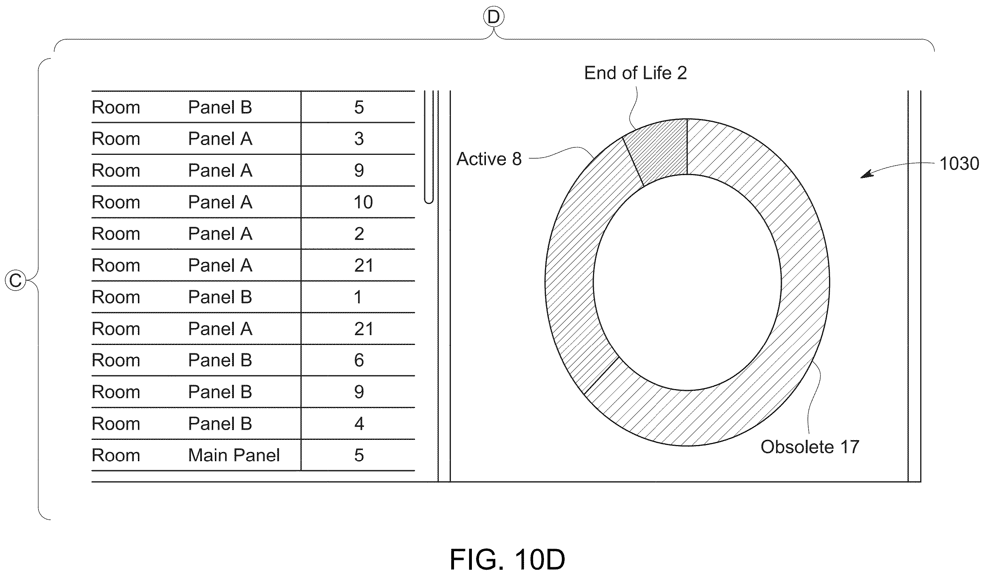

The lifecycle status process chart 920 displays high-risk areas, processes, cabinets, or the like for parts or part quantities. For example, the lifecycle status process chart 920 is a bar graph providing a lifecycle status breakdown for a process category. In this example, each category of parts is selectable to display only the active, end of life, and obsolete parts. The bar graph displays the area, process, or cabinet with the most parts at the top of the bar graph. The filters 930 receive inputs for filtering data used to generate the risk summary section 910, the lifecycle status process chart 920, and the lifecycle chart 940. The lifecycle chart 940 displays a visual of lifecycle status for products for a selected area, process, cabinet, or the like. The more details button 950 is selectable to access additional information for a selected part of the lifecycle status process chart 920 (e.g., via a user interface, such as, for example, a process overview more details user interface 1000 illustrated in FIGS. 10A, 10B, 10C, and 10D).

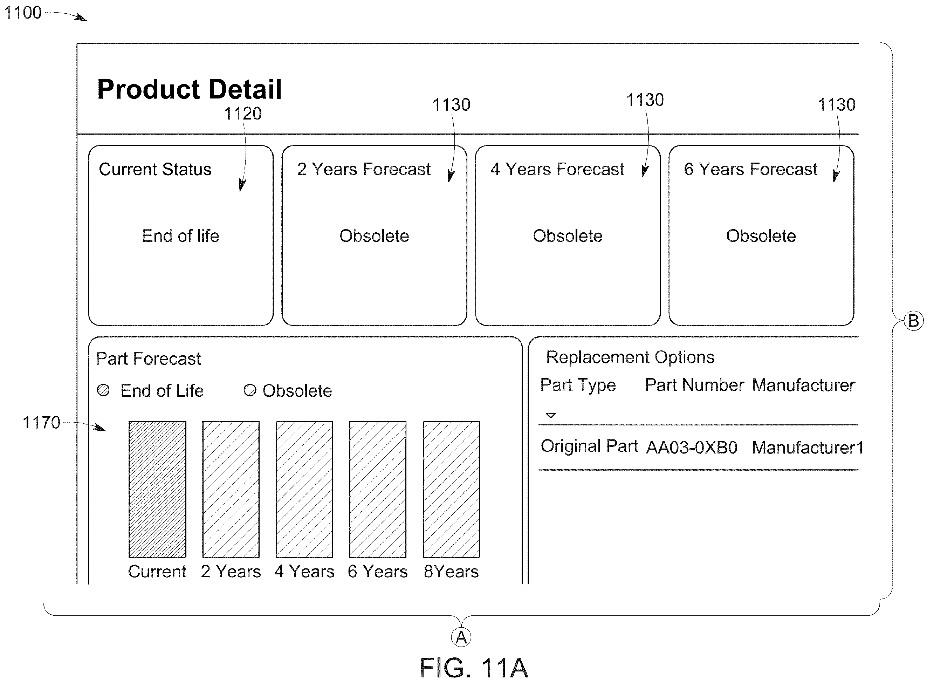

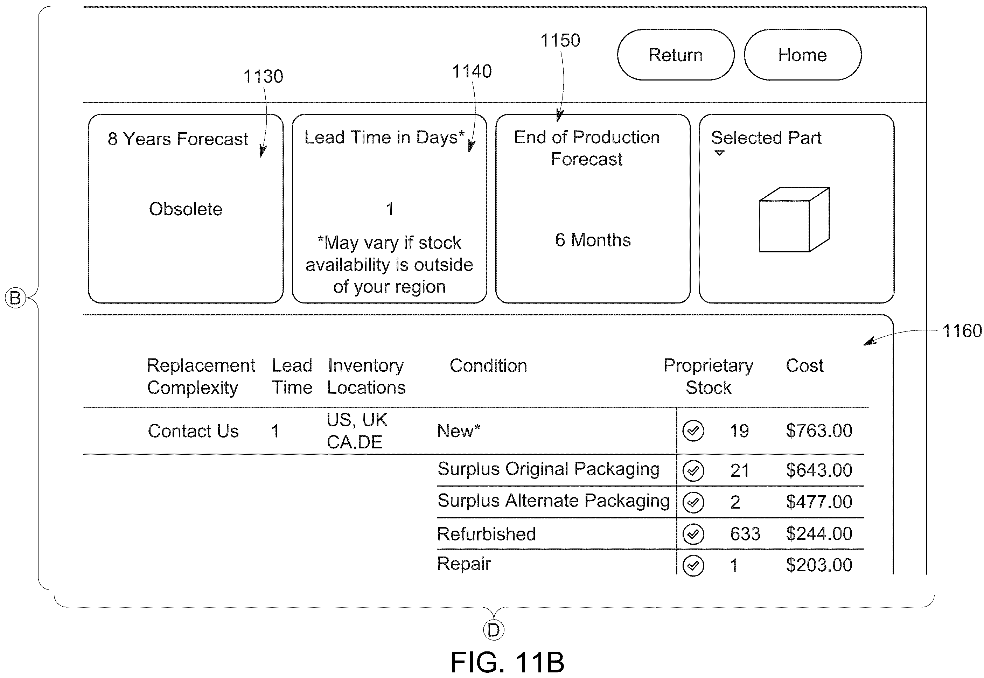

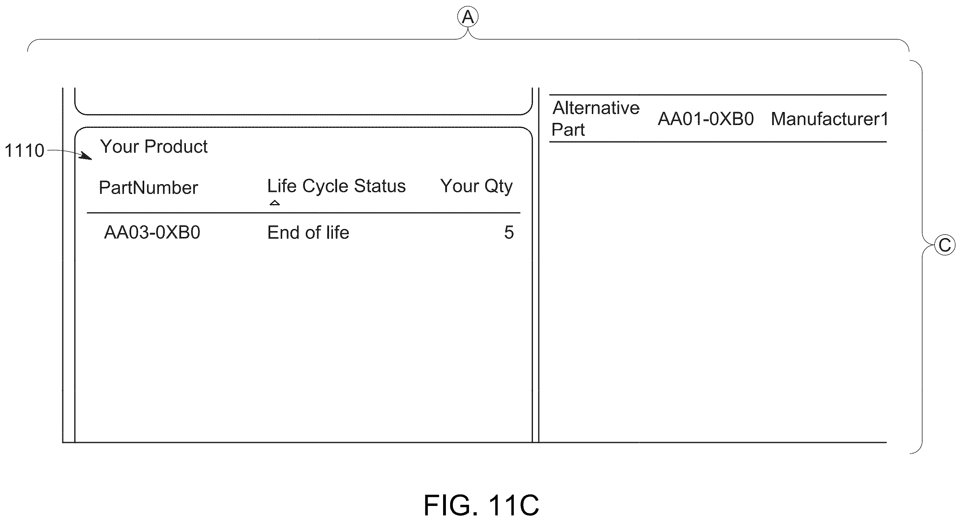

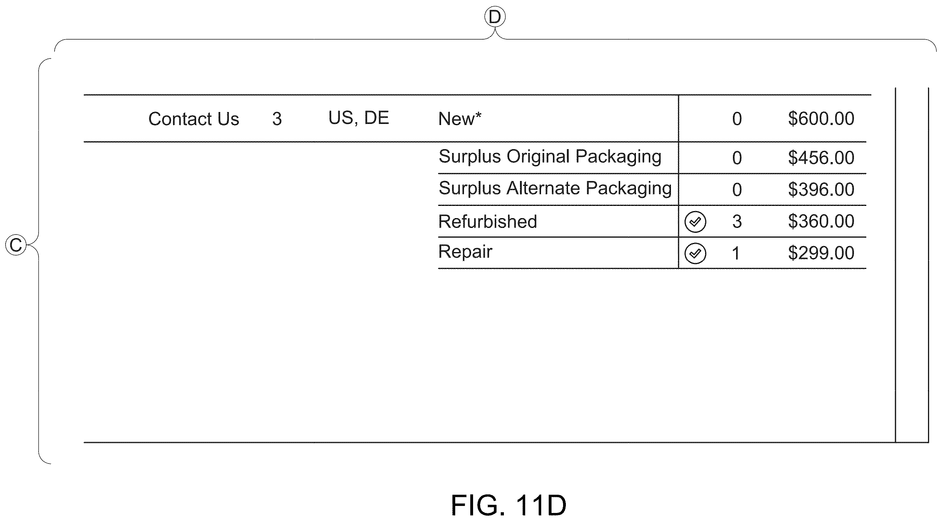

In some examples, the process overview more details user interface 1000 provides a more detailed view of products in a particular area, process, cabinet, or the like as selected through the process overview user interface 900. The process overview more details user interface 1000 includes a product summary section 1010, a product detail section 1020, a lifecycle status chart 1030, and a more details button 1040. The product summary section 1010 includes a part count of the number of parts in a selected area, process, cabinet, or the like and a part count categorized by lifecycle status (e.g., active, end of life, and obsolete). The product detail section 1020 includes detailed information for a part, such as, a part number, a manufacturer, a lifecycle status, an area, a process, a cabinet, and a quantity installed. The lifecycle status chart 1030 displays a visual breakdown of parts of the product detail section 1020. The more details button 1040 is selectable to access additional information for a selected part of the product detail section 1020 (e.g., via a user interface, such as, for example, a product details user interface 1100 illustrated in FIGS. 11A, 11B, 11C, and 11D).

In some examples, the product details user interface 1100 provides similar functionality and features as the product search user interface 600 illustrated in FIGS. 6A, 6B, 6C, and 6D but with a concentrated view on a selected part of the process overview more details user interface 1000 illustrated in FIGS. 10A, 10B, 10C, and 10D. The product details user interface 1100 includes an end user products section 1110, a lifecycle status 1120, lifecycle forecasts 1130, a lead time status 1140, an end-of production forecast 1150, a replacement options section 1160, and a part forecast chart 1170. The end user products section 1110, the lifecycle status 1120, the lifecycle forecasts 1130, the lead time status 1140, the end-of production forecast 1150, and the replacement options section 1160 each may provide similar functionality and information as the end user products section 610, the lifecycle status 620, the lifecycle forecasts 630, the lead time status 640, the end-of production forecast 650, and the replacement options section 660 described above with respect to FIGS. 6A, 6B, 6C, and 6D. The part forecast chart 1170 provides a chart visualizing the lifecycle status 1120 and the lifecycle forecasts 1130.

In some examples, the system 100 is configured to perform a proactive supply chain risk assessment. The system 100 may generate a risk score, such as, for example, a probability score, for supply chain risks based on factors, such as, for example, parts lifecycle status, end user parts inventory, inventory trends, and global demand. In some implementations, the system 100 utilizes historical failure rates of parts and predictive analytics, such as, for example, machine learning, artificial intelligence, or the like, to refine risk assessment scores. The system 100 may provide a dedicated risk user interface that provides a visual overview of risk levels across a facility. The visual overview may provide insights into parts installed in the facility with a high likelihood of obsolescence or supply chain challenges. The system 100 may also include tools to identify critical parts for proactive maintenance or replacement and aids in replacing high-risk parts. The tools include risk scoring, failure prediction models, alternative part matching, availability and lead time analysis, regulatory and compliance checks, or a combination thereof. Risk scoring tools provides a risk level for parts based on lifecycle status, failure trends, and global supply constraints. The risk scoring tools may use, as input, condition monitoring information generated by external sensors (e.g., temperature, vibration) to flag deteriorating parts.

In some examples, the risk scoring tools (and associated alerts and recommendations) fuse and weigh disparate data sources to provide dynamic risk scoring, alerts, and recommendations. For example, the system 100 may use multi-layered data fusion to create a composite risk score that uses inputs, such as, for example, (i) site/environmental conditions (e.g., temperature, humidity, dust/vibration exposure during data collection/on-site assessment); (ii) operational usage (e.g., runtime hours per week and business criticality score to assess how essential the machine/process is to production/output/revenue); (iii) individual or aggregated failure trends (e.g., from one or more internal or external repair centers/databases providing part-specific, industry-specific, and cross-industry benchmarks) to identify common failure modes in similar manufacturing environments; (iv) manufacturer-provided reliability data (e.g., mean time between failure (MTBF) calculations or MTTF equivalents for the part/asset); (v) obsolescence module outputs (e.g., lifecycle status, forecasts (2/4/6/8 years), availability trends, supply chain risks, etc.), or a combination thereof. Using such aggregated data, the system 100 computes an insightful composite risk score (e.g., probability of failure/downtime) via one or more weighted algorithms (e.g., applying a weight to each input fed into a total probability calculation), with dynamic updates as new data (for each or any of (i), (ii), (iii), (iv), or (v)) arrives (real-time/near real-time feeds or periodic uploads). In some examples, one or more of the weights are customizable, such as, for example, weights for internal environment inputs, machine criticality, and run hours. As compared to other lifecycle management technologies focus on obsolescence-driven risk (e.g., high-risk parts via forecasts/alerts), the system 100 provides broad fusion of runtime criticality, environmental factors, global/cross-industry failure aggregation, and MTBF integration to provide risk scoring and ultimately, improved manufacturing equipment operations as downtime can be optimized. In other words, the system 100 computes a composite risk score for a part identifier by applying weighted factors to: (i) environmental conditions at the installation site, (ii) operational runtime hours per week and process criticality metrics, (iii) aggregated failure trends from a global repair database including part-specific, industry-specific, and cross-industry benchmarks, (iv) manufacturer-provided mean time between failure (MTBF) data, and (v) lifecycle and obsolescence information from the data feed, wherein the risk score dynamically updates based on new inputs. For example, the system 100 may be configured to aggregate disparate data sources during initial data collection (e.g., environmental surveys, runtime logs, criticality assessments) and also collect data from ongoing feeds, which enriches failure trend analysis from global repair centers to provides cross-industry benchmarking and predictive insights not available in siloed systems.

It should be understood that the scoring can be used to provide enhanced output (e.g., alerts and/or visualizations). For example, the system 100 can be configured to generate prioritized insights based on the risk scoring, such as, for example, heat maps/rankings of high-risk areas/processes/cabinets factoring in one or more of the above inputs/layers. The system 100 can similarly provide proactive recommendations based on the risk scoring, such as, for example, "accelerate spares reservation due to high MTBF-adjusted failure probability in high-runtime critical process." The system 100 can also weigh alerts by a combination of factors (e.g., higher urgency for parts with low MTBF, high runtime, nearing EOL, and adverse environment). Accordingly, the system 100 an generate prioritized electronic notifications and visualizations (e.g., risk heat maps) based on the composite risk score, with alert thresholds adjustable per part, facility, or user, and weighted higher for combinations including elevated process criticality and adverse environmental conditions.

In some examples, the system 100 selectively ingests condition monitoring data (e.g., vibration, temperature, etc.) for risk scoring or other functionality provided through the system 100 for customers who have sensors or a sensing system installed or who opt for the provider of the system 100 to deploy and implement a solution (g., audits or installations). Accordingly, while the condition monitoring information can be used to refine a risk score (e.g., real-time anomalies boost priority) and trigger enriched alerts/recommendations, this particular data source is not a required input and can be selectively integrated into the system 100. Thus, condition monitoring data availability or opt-in may not be a gated feature tied to availability or usage of the system 100. Accordingly, the condition monitoring information may be selectively integrated into the system 100 (e.g., as an input to the risk scoring and associated tools) in response to user opt-in or verification of existing customer-provided/installed sensors, or upon deployment of a condition monitoring solution by the service provider associated with the system, thereby allowing conditional enhancement of the risk score with real-time sensor-derived data. Thus, for enhanced accuracy, the system 100 supports opt-in ingestion of condition monitoring data feeds, available to customers with pre-existing systems or those electing service provider implemented monitoring, to correlate operational/environmental factors with failure predictions and prioritize interventions, but the system 100 may not require such a data feed to provide valuable output or provide the capabilities described herein to end users. Thus, the system 100 is usable in various manufacturing facilities and configurations, which improves the availability and adaptability of the system 100 as compared to other systems and associated technologies.

The failure prediction models enable the system 100 to analyze historical failure rates to anticipate high-risk components before breakdowns occur. The alternative part matching tools recommend direct, functional, or engineered replacements using an internal catalog of replace parts and manufacturer data including replacement parts. The availability and lead time tools identifies stock availability, global demand, and potential delays in sourcing replacements. The regulatory and compliance tools enable the system 100 to check compliance of replacement parts with various (e.g., global) regulations (e.g., CE, UL, Export Controls).

The system 100 may also include tools to budget for future migrations/upgrades and streamlining end user inventory to avoid overstocking or shortages. The budget tools include lifecycle forecasting, cost estimation models, return on investment ("ROI") and cost-benefit analysis, or a combination thereof. For example, the lifecycle forecasting tools may use manufacturer and third-party data to estimate 2, 4, 6, and 8-year obsolescence risk. The cost estimation models provide financial impact assessments for phased migrations versus reactive replacements. The ROI and cost-benefit tools evaluate whether to repair, replace, or upgrade based on long-term costs.

The system 100 may also include tools to streamline end user inventory to avoid overstocking or shortages. The tools enable the system 100 to reserve stock of the internal catalog to secure spare parts. The tools also use historical usage patterns and industry trends to enable the system 100 to recommend optimal stock levels to end users. The tools also enable the system 100 to provide automated restocking alerts when critical inventory of the internal catalog falls below defined thresholds. With respect to spares, the system 100 may be integrated with a managed spares ecosystem (e.g., SparesVault^{™} provided by Radwell International) that leverages functionality of the system 100 described herein (e.g., obsolescence forecasts, risk scoring, predictive maintenance priorities) for intelligent, automated gap filling and optimization. Such integration can be structured as an add-on for the system 100 (e.g., via a subscription fee model) for holding/guaranteeing stock. For example, to provide portal-driven gap analysis and recommendations, the system 100 may be configured to analyze one or more data layers in real time/near real-time: (i) installed base (parts on shop floor from ALA/portal uploads); (ii) customer on-site inventory (stock levels at facilities), and (iii) guaranteed/held spares via the integrated managed spares ecosystem to perform automated gap analysis (e.g., "Critical PLC in high-risk process has 0 spares on-site and none reserved-risk exposure high"). The system 100 can be configured to use the analysis results to generate recommendations including minimum and maxim (min-max) levels of spares (e.g., minimum is 2 for redundancy, maximum is 5 to avoid excess) that are tailored by risk/business criticality. Accordingly, through the integration with the managed spares ecosystem, the system 100 can be configured to perform automated gap analysis by comparing installed part quantities from the installed base data, customer on-site inventory levels, and reserved/held spares in the managed spares ecosystem inventory (which may be provided by the same service provider as the system 100 or a third-party) and generate one or more recommendations including, for example, minimum and maximum stocking levels optimized based on obsolescence forecasts, composite risk scores, and predictive maintenance priorities. Thus, the system 100 can serve as a centralized control interface for the managed spares ecosystem, enabling users to monitor reserve coverage, adjust minimum and maximum parameters, and receive dynamic recommendations that leverage the service provider's proprietary inventory to guarantee availability for critical and obsolete parts. In some implementations, when the system 100 recommends a spare (e.g., a critical spare), the system 100 can offer an option to create an account with the managed spares ecosystems. In response to receiving a selection of this option, the system 100 may redirect to a website or portal of the managed spares ecosystem or may communicate with the ecosystem on the customer's behalf (e.g., through various API calls or other communications). Accordingly, in some implementations, the system 100 may use stored information about a customer to manage the creation of the account with the managed spares ecosystem and communicate what particular parts should be placed in reserve. The managed spares ecosystem would, in response to establishing a valid account and receiving a part identifier, remove or adjust the availability of the part from offerings provided via the ecosystem and associated (e.g., through an account record) the reserved part with the customer account. The ecosystem may also store information indicating that the customer account was created through the system 100, which may allow the ecosystem to communicate customer account information to the system 100 (e.g., for inclusion in various dashboards, inventory counts, alerts, etc.). Existing spares ecosystems fail to provide a portal-centric analysis using fused installed/customer/service provider data or min-max optimization tied to risk/obsolescence as the system 100 in this configuration.

As noted above, in some examples, integration with the managed spares ecosystem can be configured as a subscription management fee model with a guarantee. For example, a customer of the system 100 can pay a fee for the service provider to hold/reserve stock (e.g., avoiding full purchase costs/space needs) with guaranteed access (e.g., priority fulfillment, locked pricing). The system 100 may also be configured to include integrated financial tools that allow a user to compare such a subscription fee versus an outright buy, assess the return on investment for reserves, assess the cost-benefit tied to risk reduction, and the like. In other words, the system 100 may charge a management fee to hold and guarantee access to reserves spares through the managed spares ecosystem, with the portal provided through the system 100 providing visibility into reserved quantities, coverage gaps, and financial comparisons (e.g., fee-based reservation vs. outright purchase or migration costs) while also drawing from the system's extensive proprietary inventory/database to provide assured post-obsolescence support. By outsourcing spare part holding to the service provider's extensive network, the integration of the managed spares ecosystem eliminates customer capital tie-up and space constraints while guaranteeing spares availability through proprietary scale, with portal monitoring ensuring real-time alignment with evolving risk and predictive insights. While existing spare management services may provide subscription-based outsourcing, such services do not provide detailed fee structures, guarantees linked to portal visibility, or scale-driven uniqueness (e.g., extensive priority inventory/database/distribution lines ensuring rare/obsolete coverage).

In some examples, the managed spares ecosystem recommendations and/or reservations are part of a closed-loop integration with other tools/aspects of the system 100. For example, the recommendations and/or reservations may be triggered or refined based on one or more inputs provided by the system 100, such as, for example, obsolescence (e.g., reserve before EOL), risk (e.g., prioritize high-composite-score parts), predictive maintenance (e.g., reserve for AI-scheduled items in critical processes), or a combination thereof. Portal dashboards generated by the system 100 can also be integrated with such recommendations and/or reservations to show coverage heat maps, reserve status, and alerts (e.g., "Low coverage on high-risk item-adjust min-max?"). Accordingly, the managed spares recommendations and reservations can be automatically proposed or adjusted based on outputs from various tools and functions of the system 100, including, for example, obsolescence management, risk management, and AI-enabled predictive maintenance, and, in some examples, the system 100 can provide visualizations displaying real-time coverage against installed base and business-critical priorities.

In some examples, the system 100 is configured to determine failure trends for parts installed in a facility. The system 100 can automatically retrieve, via a dedicated communication connection, failure data from the factory server 107. The system 100 can receive data from the communication device 106. The system 100 may receive audits and/or repair history logs including failure data, such as, for example, part tags for parts that have experienced failures. The tags may include, for example, failure type, frequency, and impact across industry type, component type, and/or lifecycle status. The system 100 may be configured to aggregate data and categorize failures based on the part tags, industry to identify common failure patterns across similar operations, which enable generation of benchmarking and identification/flagging of high-risk parts across industries to identify common failure patterns and high-risk parts. The system 100 may be configured to provide predicted failure alerts based on the aggregated data.

In some implementations, the system 100 combines determined failure trends with a global repair database stored in the memory 220 to identify common repair issues, failure causes, and parts with high repair frequency to create an "enriched failure trend." In some instances, the system 100 aggregates failure data across industries and regions. The global repair database includes repair history across serviced parts, including failure type, repair actions taken, and success rates. The system 100 identifies repeat failure parts that require frequent servicing in the global repair database and provides insights into root causes (e.g., overheating, electrical surges, mechanical wear) for the repeat failures. For example, the system 100 cross-references failure trends with repair records to establish common failure causes (e.g., power supply failures often caused by capacitor degradation) to identify patterns of high-risk components across different manufacturing environments. The system 100 collects failure trends from, for example, on-site audits and user-reported issues, and links the failures of parts with applications, industries, and environmental factors. The system 100 also collects environmental conditions (e.g., temperature, humidity, vibration, dust levels) of the parts along with the collected failure trends. The system 100 can generate both a customer-specific failure profile and an industry-wide failure benchmark to refine predictions based on the combined data. The system 100 predicts future failure likelihood of parts based on real-world repair rates. For example, the system 100 generates, using artificial intelligence models, scores for parts based on failure frequency, customer environmental conditions, and likelihood of future failures. In this example, the system 100 generates recommendations for proactive maintenance or alternative replacement options based on the scores, wherein the scores are a failure probability. In addition, the system 100 generates automated alerts in the application 350 for high-repair-frequency parts.

The system 100 may be configured to use such enriched failure trends to generate the risk score and/or generate a comprehensive risk profile for the facility discussed above. The system 100 can provide one or more user interfaces including visualizations for failure trends, which may be filterable by part, manufacturer, industry, location, area, process, cabinet, and the like to provide for granular analysis. Advantageously, the enriched failure trends enable proactive maintenance based on failure data, mitigation of supply chain disruptions, identification of systemic issues, and inform decisions on replacement, repair, or upgrades. For example, the system 100 provides, via the application 350, real-time alerts to end users when a part is flagged as high failure risk. The system 100 can configure the alerts based on multiple factors including frequency of failure in global repair data, environmental conditions affecting the part, and end-of-life status that impacts future availability. In another example, the system 100 provides, via the application 350, real-time alerts to end users when critical parts are below a global supply threshold and identifies alternative replacements before part failures occur. In this example, the system 100 can provide live supply chain risk modeling to aid end users in adjusting procurement strategies. In another example, the system 100 aggregates failure data across industries and applications and identifies patterns in recurring issues (e.g., a specific drive model failing frequently in high-temperature environments). In this example, the system 100 provides, via the application 350, charts including end user failure trends and industry-wide benchmarks to aid in a determination of whether the end user failure trend is abnormal or expected based on the industry-wide benchmarks. In yet another example, the system 100 provides cost-benefit analysis between repair, replacement, or upgrade based on one or more factors. The factors include repair cost versus new part pricing, availability of alternative/replacement parts, and long-term viability of the part.

In some examples, the system 100 monitors installed part conditions and automatically generates alerts. The portal server 102 receives and tracks vibration data from one or more sensors for assets to detect potential issues such as, for example, misalignment, imbalance, or wear. The sensor data may be provided as a real-time data feed (e.g., from the factory server 107), a periodic data upload, or the like. For example, the system 100 may receive temperature data from one or more sensors and identify fluctuations in temperature from the received data to identify assets overheating or experiencing other thermal irregularities. The system 100 can generate real or near-real time alerts for such detected irregularities. In some instances, the system 100 can cross-reference the condition monitoring insights with lifecycle data to prioritize equipment nearing end-of-life for proactive maintenance. For example, the system 100 prioritizes alerts for parts nearing end-of-life and/or parts identified as high-risk based on historical failure data and environmental conditions (e.g., overheating, vibration, humidity). Advantageously, the prioritized alerts for parts that are more likely to fail due to age or lifecycle status rather than issuing unnecessary alerts for newer components. In some implementations, the system 100 receives, via the application 350, alert configurations settings from an end user. For example, the system 100 modifies alert thresholds for overheating, vibration, or other conditions of parts based on a risk tolerance of the parts defined by the end user. The system 100 can also modify weights associated with the alerts. The alerts can be weighted based on lifecycle stage, which allows end-of-life or at-risk parts to receive higher priority notifications. The system 100 can also configure the alerts based on installation date data and allow alerts to factor in equipment age for prioritizing maintenance and replacement schedules. In some examples, the system 100 does not trigger an alert based on a single event (e.g., part temperature exceeding a threshold). In those examples, the system 100 triggers an alert based on a combination of factors, such as, for example, lifecycle stage, environmental conditions, machine runtime and age, historical failure trends, or the like. The multi factor-based alerts advantageously provide relevant and actionable alerts, reducing false positives based on a single event and preventing unnecessary downtime.

Additionally, or alternatively, the system 100 may use the failure trends described above combined with the condition monitoring data to identify recurring issues. For example, the system 100 cross-references failure trends (e.g., common failure types, frequency, impacted components) with condition monitoring data (e.g., temperature, vibration, load) enabling the system 100 to determine patterns, such as, specific failure modes occurring under certain environmental conditions, usage patterns, or the like. In some implementations, the system 100 uses the combined failure trends and condition monitoring data to provide predictive insights. For example, the system 100 identifies a reoccurring issue, such as, for example, power failure in a specific component type following overheating and flags the specific component type as a potential risk. In some instances, the system 100 predicts when similar failures (e.g., the power failure) are likely to occur when similar conditions (e.g., overheating) are identified, enabling proactive maintenance planning. In some implementations, the system 100 assigns risk levels to parts based on past failures and current conditions. For example, the system 100 prioritizes some parts as high-risk, such as, for example, parts nearing end-of-life with high failure rates, for early intervention alerts. In some implementations, the system 100 automatically generates reports and recommendations. The reports include reoccurring failures and identified root causes associated with the reoccurring failures. The recommendations include preventative actions, such as, for example, scheduling proactive maintenance and recommending replacement parts for active parts prior to failure. The system 100 can include one or more user interfaces including an overview of monitored parts including status indicators, historical trends, predictive analytics, and insights into high-risk areas and processes. Advantageously, the user interfaces enable proactive maintenance, reduce unplanned downtime, reduce repair cost by extending the lifespan of assets, and inform decisions on replacement, repair, or upgrades.

The predictive maintenance described herein may use one or more artificial intelligence/machine learning ("AI/ML") techniques (e.g., machine learning models for failure prediction, anomaly detection, scheduling optimization, or a combination thereof) applied to the aggregated data with outputs that are prescriptive (schedules and priorities) and actionable. For example, artificial intelligence techniques, including supervised/unsupervised machine learning algorithms, can be applied to historical repair data from global centers, manufacturer MTBF data, and site-specific inputs to generate probabilistic failure forecasts. These models enable the system 100 to provide prescriptive scheduling that focuses on highest business-risk areas, outperforming traditional threshold-based approaches by learning patterns across industries and adapting over time.

In particular, in some examples, the system 100 can use one or more machine learning models (e.g., trained on historical/global repair data, sensor feeds, MTBF data, runtime/criticality, environmental factors, obsolescence timelines, or a combination thereof) to forecast failure probabilities/timings with higher accuracy than rule-based systems. The system 100 may also use one or more machine learning models to prioritize schedules by business risk impact (e.g., using one or more models that weigh downtime cost, production loss, safety implications for high-criticality processes, or a combination thereof). The system 100 may also use one or more machine learning models to dynamically refine predictions with condition monitoring data to use AI for anomaly detection and root-cause analysis. Accordingly, the system 100 can be configured to employ one or more AI/ML models to analyze fused data (e.g., lifecycle forecasts and availability fused with composite risk scores including, for example, environmental conditions, runtime hours, process criticality, global failure trends, and MTBF) to predict equipment failure probabilities and timings and, optionally, provide scheduling recommendations prioritized according to business risk impact (e.g., weighted by potential downtime costs or production criticality). As noted above, the one or more AI/ML models can incorporate condition monitoring data selectively (in response to user opt-in, verification of existing sensors, or deployment of a service provider solution) for real-time anomaly detection and predictive refinement, which reduces false positives through multi-factor validation. Existing lifecycle management systems and technologies fail to incorporate AI/ML as an embedded capability, and, by using such techniques, the system 100 provides a novel application of AI to multi-source industrial data for business-prioritized outcomes and, subsequently, improved facility operation.

In examples using such AI/ML techniques, the AI outputs can include closed-loop AI recommendations with supply/repair assurance. For example, the AI outputs can include recommended actions (e.g., "Schedule vibration check and reserve spares for servo in 45 days") directly linked to solutions (e.g., parts pulled from proprietary inventory/databases of new/surplus/refurbished, repairs initiated via global centers, or suggested migrations). Such outputs help ensure that "the customer has all the solutions," and, in some implementations, the AI/ML techniques may be configured to simulate scenarios (e.g., "Repair vs. replace cost-benefit using current inventory pricing"). In other words, the system 100 can provide AI-generated predictive maintenance recommendations that include integrated, prioritized solutions sourced from an extensive proprietary inventory and repair services from an extensive network of repair centers, wherein such recommendations are presented within the consolidated graphical user interface for immediate execution (e.g., reserve, purchase, or repair initiation). Thus, AI-enabled outputs provide end-to-end resolution by matching predictions to available supply chain and repair capabilities, extending part life post-obsolescence and minimizing response times through automated, data-driven action pathways. Existing lifecycle management technologies fail to tie such predictive insights directly to proprietary inventory/repair fulfillment in a single portal.

Similarly, the system 100 may be configured to use AI/ML techniques to provide visualizations, alerts, and continuous improvement. For example, the system 100 may provide AI-powered dashboards that include predictive calendars/heat maps ranked by business risk, with confidence scores or "what-if" simulations. The system 100 may also AI/ML techniques to provide proactive, intelligent alerts, such as, for example, AI-triggered notifications (e.g., escalating urgency as failure probability rises). The system 100 may also use feedback loops including data regarding actual outputs (e.g., repairs, failures) to retrain and improve the AI/L models. Accordingly, the system 100 may be configured to provide AI-enhanced visualizations (e.g., predictive maintenance calendars, risk heat maps with failure probability overlays) and/or generate intelligent electronic notifications that adapt based on evolving model predictions and user feedback.

In some examples, the system 100 provides real or near-real time insights of repair activities for parts installed in a facility. The system 100 may provide a status (e.g., received, in progress, completed, shipped) and notifications of repair milestones to the electronic communication device 105 based on repair data provided to the system 100 (e.g., the portal server 102) during repairs (e.g., by the facility server 107 or other third-party systems or devices, such as maintenance or engineering systems or devices). The system 100 may integrate repair data, which may be retrieved from a repair database stored in the memory 220, with failure trend insights, as discussed above, to monitor part reliability/performance, identify frequently repaired parts, and determine recurring issues. The repair data may include a part number, a manufacturer, a failure type and root cause, a repair frequency and success rates, parts replaced or refurbished during repair, or a combination thereof. The failure trend insight data may include condition monitoring data, lifecycle data, environmental data, or a combination thereof. The system 100 correlates the repair data with the failure trend insight to identify high-failure parts and perform monitoring. For example, the system 100 may flag parts that undergo frequent repairs (e.g., exceeds a repair threshold) or have a high failure-to-repair ratio (e.g., exceeds a ratio threshold). In some instances, the system 100 marks parts with repeat failure modes (e.g., overheating, capacitor failure) as high-risk. In another example, the system 100 tracks failure frequency of parts over time to determine whether a repair is sustainable or if replacement is more cost-effective. In addition, the system 100 may determine, using repair data, a downtime and associated cost caused by part failures. The downtime and associated cost can be used by system 100 when providing information regarding parts needing repair or replacement (e.g., providing users with an average downtime if a part fails and/or an average downtime for part replacement or repair). In some instances, the system 100 also tracks repair turnaround times to assist end users plan for critical part availability. The system 100 may also be configured to track average repair durations (e.g., by part type and manufacturer). In another example, the system 100 identifies recurring issues based on failure frequency and generates an insight report. In this example, the system 100 generates an insight report for the end user when the same failure is logged across multiple repair cases. The insight report may include common failure causes, affected industries and sites, and recommendations of whether a repair extends lifespan or if replacement is necessary. In addition, the system 100 can recommend a preemptive replacement of a part when declining reliability of a part is identified after repeated repairs or alternative parts with better reliability when failure trends indicate design flaws. In some examples, the system 100 provides visualizations of such repair data and statistics through one or more user interfaces. For example, the system 100 may provide a visualization of repair volume trends over a defined time, breakdown of repair statuses, and heat maps linking repairs to specific areas, processes, or cabinets of a facility. The visualizations may also be interactive, such as one or more interactive charts displaying repair frequency and associated lifecycle stages of parts. The interactive charts enable end users to utilize the portal application 350 to drill down into data, filter views, and dynamically explore insights rather than just viewing static reports. The interactive charts can include an interface element, corresponding to high-level repair volume trend, enabling the end user to filter views to view part categories (e.g., drives, PLCs, HMIs), individual parts numbers, and manufacturers. The interactive charts can also include an interface element, corresponding to a part repair status, enabling the end user to filter views to view parts according to a category, such as, for example, in progress, completed, or delayed. The portal application 350 also enables end users to use, for example, a graphical pointer, to hover over a heat map to view the most frequently repaired areas within a facility. The portal application 350 also enables end users to select a specific process area or cabinet to view detailed part repair trends for that location. In some implementations, the interactive charts include repair frequency and lifecycle stage information of parts. In those implementations, the portal application 350 enables end users to filter by lifecycle phase, compare failure trends between aging and newer equipment, and overlay supplier stock levels in the interactive chart to assess replacement urgency. The interactive charts also enable end users to utilize the portal application 350 to filter information based on time periods to analyze long-term versus short-term trends. The interactive chart can also be filtered by manufacturer and repair facility location.

Accordingly, the system 100 (e.g., the portal server 102) can be communicably coupled, via the communication network 108, to the facility server 107 and provide a unified view of part lifecycle, repair history, and replacement options for one or more facilities.

In some examples, the system 100 is configured to generate a visualization of cost-savings data. In some instances, the visualization includes, for example, charts and graphs of savings across different levels of operations of one or more facilities. In those instances, the savings data may be segmented to align with the organizational structure (e.g., area level, process level, cabinet level, or the like) to provide usable insights. For example, area-level visualizations provide savings insight across specific site areas, process level visualizations provide insight into how cost-savings measures impact individual processes, and cabinet level visualizations provide granular details down to specific equipment locations. The system 100 may provide various selection mechanisms for filtering and sorting data with such visualizations to identify specific areas of interest, such as high-savings locations or processes, or savings at particular levels (e.g., cabinet levels) for targeted analysis.

In some examples, the system 100 combines end user inventory data with server-side data (e.g., stored in the memory 220) to generate a unified view of part availability. For example, the system 100 (e.g., the portal server 102) may be configured to receive/retrieve, e.g., via a dedicated customer application program interface ("API") and the portal application 350, end user inventory data from the device memory 320. The API provides stock data that is updated dynamically, which reduces manual updates and improving data accuracy. In some instances, the system 100 identifies critical parts with limited stock across both server and client (e.g., end user) inventories. Thus, the system 100 provides one or more user interfaces that identify surplus or low-stock items, which aids proactive maintenance and planning by aligning stock data with lifecycle insights. Advantageously, the system 100 may be configured to streamline inventory management by unifying stock visibility, reducing downtime by providing real-time or near real-time updates for critical parts, proactively mitigating risks by aligning stock data with lifecycle and risk insights, and providing customizable integration for end user specific stock management systems.

In some examples, the system 100 is configured to reserve spare parts for an end user. For example, the system 100 may provide one or more user interfaces for identify a needed part (see, e.g., discussion regarding part searching) and includes an option in such user interfaces to initiate a "reserve" on a part, which allow the end user to purchase, at the lower of an agreed price or current market price, the reserved parts in the event of a failure of a part in a facility of the end user. After recording such a "reserve" transaction, the system 100 can present this information in one or more user interfaces providing insight into stock coverage, which becomes more accurate by including the quantity and types of parts reserved. The system 100 may also be configured to identify gaps in inventory and, optionally, provide prompts for rectifying such gaps. The system 100 can identify gaps in inventory based on real-time or near real-time stock data, lifecycle insights, and/or failure trends. The system 100 can cross-reference installed parts inventory of a facility with available stock at the facility of the end user to flag missing or insufficient spare parts. For example, the system 100 may identify an inventory gap when ten (10) PLCs are installed but only two (2) spare parts are available. In another example, the system 100 determines an inventory gap is present when a critical part has an end-of-life or obsolete lifecycle status and no spares for the critical part are in inventory. In this example, the system 100 prioritize identified inventory gap as a high-risk gap, suggest alternative sourcing options, and triggers an alert to the end user. High-risk gaps can trigger notifications or in-portal alerts for proactive action. The system 100 may also be configured to integrate the reserved spare parts feature with other features or programs, such as, for example, the lifecycle insights or risk management programs discussed above. For example, including adequate reserve parts may reduce downtime risks identified by the system 100. In some implementations, the system 100 predicts/estimates future demand for spare parts based on historical failure rates and/or repair frequency and recommend adjusting stocks based on future demand for the spare parts. For example, if a servo motor model has a 20% annual failure rate and only one spare is stocked, the system 100 recommends increasing stock levels for the servo motor model. In this example, the system 100 accesses the portal inventory to determine whether the servo motor model is available for purchase. In addition, the system 100 provides automated restock recommendations to the end user based on urgency, cost, and/or lead time.

In other examples, the system 100 includes a management fee calculator feature. The management fee calculator calculates financial implications of maintaining dedicated stock versus outright purchasing. For example, the management fee calculator uses a total sell price of selected products and applies a 30% reduction. The management fee calculator divides the adjusted value by a defined contract duration (e.g., 12, 24, 36, or 48 months) to determine a monthly management fee. The management fee calculator aids users in comparing the financial impact of maintaining a dedicated stock of critical parts versus purchasing the critical parts outright. The system 100 may also be configured to identify, based on stored data of parts, lifecycles, and inventory (both at the end user and in the general market) opportunities to free up funds for other (e.g., critical) projects or initiatives. In some instances, the system 100 provides one or more user interfaces for receiving user-configurable parameters (e.g., quantity of parts, duration of stock holding, pricing information) related to dedicated stock. After receiving the user-configured parameters provided by the end user via the user interfaces, the system 100 uses the user-configured parameters to calculate and compare the financial impact of maintaining dedicated stock versus outright purchasing. Additionally, the system 100 can utilize stored data of part lifecycles and inventory levels at the facility of the end user and/or the general market to identify cost-saving opportunities. In some examples, the system 100 weighs the cost of stockholding against the operational risks of not having critical spares readily available. The system 100 may also align inventory decisions with maintenance, upgrade, and migration strategies associated with an end user (e.g., entered or otherwise defined or customized for the end user). In yet other examples, the system 100 provides a visualized breakdown of costs, including charts and summaries in one or more user interfaces.

In some examples, the system 100 is configured to adjust reserved spare parts levels by modifying an amount of reserved spare parts (e.g., automatically or in response to user inputs). The system 100 can provide agreement updates (e.g., costs, parts quantity) when such reserves are adjusted. In some instances, the system 100 provides an interface displaying current stock levels and coverage, a summary of recent stock additions or removals, and notifications for upcoming monthly adjustment windows. In those instances, the system 100 may be configured to identify any coverage gaps after adjustments. When the system 100 identifies coverage gaps, the system 100 may generate a backfill list for the end user outlining critical parts that may need replenishment. Simultaneously, the system 100 may notify administrators of a potential quoting opportunity to proactively address shortages. The system 100 evaluates non-stocked gaps and compares installed quantities against inventory levels to assess supply risk. Based on the non-stocked gaps and supply risk, the system 100 can recommend minimum and maximum stocking levels to provide adequate spare parts availability while minimizing excess inventory.

In some examples, the system 100 uses received and/or stored data to generate recommendations. For example, the system may generate one or more recommendations based on end user data, which can include lifecycle information, failure trends, and stock levels. The system 100 can identify end users with high-risk or obsolete products, frequent equipment issues, low or no stock of critical parts, or combination thereof. The recommendation can include relevant solutions such as, replacement parts, upgrades, or dedicated stock services. In some examples, the end user data is an aggregate of end user data in similar industries. In those examples, the system 100 generates recommendations based on identified trends and common challenges. In some instances, the system 100 modifies the recommendations for end users by applying weighted factors to end user attributes, such as, for example, location, industry, and lifecycle data. For example, the system 100 may modify a recommendation by applying weighted factors to a location of an end user based on proximity of the end user to an inventory shipping facility. The proximity to the inventory shipping facility influencing stock availability and lead times for replacement parts. In another example, the system 100 modifies a recommendation by applying weighted factors to an industry of an end user based on environmental conditions and operational demands of the industry of the end user. The environmental conditions and operational demands impact part selection for replacement parts. In addition, the system 100 can prioritize part selection based on durability and/or compatibility of the parts required for adequate for the environmental conditions and operational demands of the industry. In yet another example, the system 100 modifies a recommendation by applying weighted factors to a lifecycle status of parts installed in a facility of an end user based on obsolescence risk and supply chain stability for one or more parts of the facility of the end user. In this example, the system 100 determines urgency and alternative sourcing recommendations based on the obsolescence risk and supply chain stability. These weighted factors tailor recommendations to unique situation of each end user while balancing risk, availability, and cost-effectiveness.

In other examples, the system 100 predicts end user needs based on historical purchasing patterns, maintenance schedules, risk management data, or a combination thereof, and proactively recommend products or services before customers experience downtime or stock shortages. The system 100 tracks recommendation performance and end user responses for continuous improvement recommendation generation. In some instances, the system 100 includes complementary products or services, such as, for example, repairs and condition monitoring solutions.

In some examples, barcodes or other machine-readable codes or tags, such as, for example, quick response ("QR") codes, may be used with the system 100 to provide access and navigation to particular pages or reports provided through the system 100. As one nonlimiting example, QR codes for process and cabinet levels may be generated and linked to their respective reports within the system 100. Each QR code encodes a uniform resource locator (URL) including a page identifier ("ID") or section ID that identifies a specific page or tab within the portal provided by the system 100. In other words, each page in the portal has a unique ID and this ID is used in the URL to direct a computing device to the specific page. The IDs may be programmatically generated or extracted and used in the QR codes, which lands users on specific pages with specific filters applied (e.g., filtering data to a particular area, process, or cabinet). The QR codes can similarly be used to navigate a user device to an embedded report webpage using, for example, JavaScript Embed API or by modifying the embed configuration.

Personnel tasked with collecting parts data and/or customer representations may place the QR codes (e.g., printed on a sticker or with other adhesive) at relevant locations. When a user scans such a QR code with the camera of their user device (e.g., a smart phone, tablet computer, smart watch, smart glasses or other wearable, or the like), the user device directs the user to the corresponding page provided via the system.

Accordingly, examples provided herein provide improved technology for delivering a centralized obsolescence management with a real-time or near real-time, automated, and interactive platform, providing end users with visibility, risk management, and decision-making tools for industrial automation applications, which results in reduced resource usage (time as well as computing resources) as compared to existing technologies, which may rely heavily on decentralized, manual processes that are not configurable. In particular, examples provided herein receive physical measurements from one or more sensors (e.g., vibration, temperature, cycle counts, failure rates, etc.) and receive lifecycle information, including lifecycle status information (e.g., active, end-of-life, obsolete, etc.) via one or more data feeds (e.g., via one or more API data feeds) to provide a novel integration of real-time or near real-time manufacturer data and physical sensor data to improve proactive risk management technology (e.g., manual or siloed techniques). The examples also generate and transmit electronics notifications with selectable mechanisms for accessing consolidated user interfaces for replacement options, which again represents an improvement over manual or siloed techniques that reduces machinery downtime and streamlines procurement (i.e., reducing resource usage) through (e.g., real-time or near real-time) data integration and actionable outputs. Some examples provide further technological improvements, such as, for example, through standardized classification enabling novel proactive obsolescence management. Some examples further provide part tracking (e.g., through lifecycle status) (see, e.g., chart 510 illustrated in FIGS. 5A and 5B) and, as the disclosed system is configured to access inventory quantities across multiple facilities (see, e.g., all-locations user interface 700 illustrated in FIGS. 7A and 7B), the system supports multi-site inventory tracking providing a novel feature for distributed facility management technology and provides enhanced efficiency for decentralized technologies. In addition, some examples provide customizable technical thresholds (e.g., for part identifiers, facilities, and/or end users), which enables tailored risk management as an improvement over generic notification systems and supports technical data processing. For example, automatically-generated technical notifications (e.g., provided as in-app notifications via the portal application 350, email messages, text or instant messages, etc.) provide flexible, technical communications of real-time or near real-time risks and alerts tied to sensor and lifecycle data (e.g., collected via real-time or near real-time data feeds), which is a novel feature enhancing user interaction and maintenance planning (e.g., as compared to manually-generated notifications). The dynamic visualizations and user-interactive features provided by the examples of the portal described herein (e.g., User Table, interactive map 520 with selectable icons, updates chart 510 with factory selections, filtering for multi-site part management, lifecycle status forecasts 630, part forecast charts 1170 for part identifiers across multiple time periods with unified replacement options, etc.) also provide technological improvements over static reporting and interface tools. Similarly, the generation and submission of requests for quotes for replacement options via multiple data channels in response to GUI inputs represents a novel feature that leverages (e.g., real-time or near real-time) API data to improve existing procurement systems and technologies.

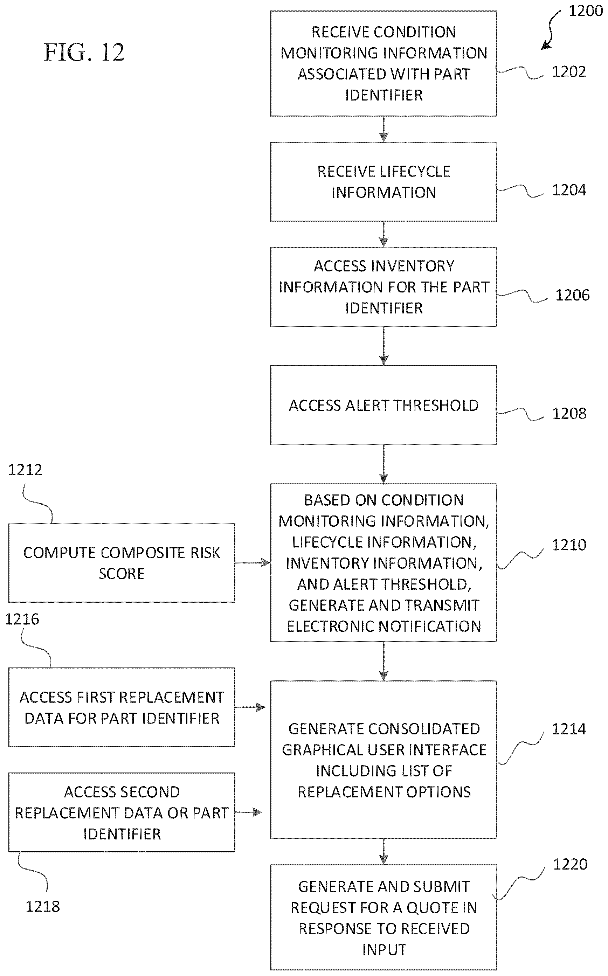

FIG. 12 is a flowchart illustrating a method 1200 performed via the automation lifecycle system of FIG. 1 according to some examples. It should be understood that the method 1200, or at least a portion thereof, may be performed via the electronic processor 210 of the portal server 102 executing instructions stored in the memory 220. However, as previously noted, functionality described herein as being performed by the system 100 may be distributed among multiple electronic processors in one or more devices, including, for example, distributed among one or more electronic processors included in the portal server 102, the factory server 107, the electronic communication device 106, or a combination thereof. Unless otherwise specified, portions of the method 1200 may be performed in various orders and sequences, including with interleaving steps, parallel steps, repeated steps, pauses or delays, or a combination thereof. Inputs described with respect to the method 1200 may be received from computer-readable medium, via various wired or wireless communication connection, as input received via a displayed user interface, or a combination thereof. Similarly, any outputs generated as part of the method 1200 (including intermediary outputs) may be stored, transmitted or communication, output as part of a user interface, or a combination thereof.

As illustrated in FIG. 12, the method 1200 includes receiving condition monitoring information generated via a sensor, wherein the condition monitoring information is associated with a part identifier representing a part installed in a facility (at block 1202), and receiving, through an application programming interface (API), a data feed including lifecycle information, wherein the lifecycle information includes a lifecycle status for the part identifier (at block 1204). The condition monitoring information may include at least one selected from a group consisting of temperature, vibration, a cycle count, and a failure rate. The lifecycle status may be selected from a set of statuses including active, end-of-life, and obsolete. As noted above, in some examples, the condition monitoring information is an optional input as such information can selectively be fed (e.g., as a real-time or near real-time data feed or as a store and forward batch) into the system 100. In other words, the condition monitoring information generated via the sensor can be selectively used to generate and transmit the electronic notification, as described below, in response to opt-in or verification of installation of the sensor.

From non-transitory computer readable medium (e.g., the memory 220), inventory information for the part identifier is accessed (at block 1206), and, from non-transitory computer readable medium (e.g., the memory 220), an alert threshold is accessed (at block 1208). The inventory information may be accessed by accessing an inventory quantity of the part stored for each of a plurality of facilities (e.g., to account for replacement parts available to a customer regardless of what facility the replacement part is associated with). In some examples, the plurality of facilities may include all facilities associated (e.g., owned) by a customer or a subset of such facilities, such as for example, facilities located within a particular distance or other geographic region as the facility where the part is located. As described above, the alert threshold may be customizable for at least one selected from a group consisting of the part identifier, the facility, and an end user. Such thresholds may be stored (e.g., in the memory 220) as part of a customer, facility, and/or end user profile.

The method 1200 also includes, based on the condition monitoring information generated via the sensor, the lifecycle information received via the data feed, the inventory information, and the alert threshold, generating and transmitting an electronic notification (at block 1210). The electronic notification may include a selectable mechanism for accessing, within a consolidated graphical user interface, a list of replacement options for the part. The electronic notification may include one or more of an email message, a text message, an instant message, a voice message, and a notification to a software application installed on an end user device.

In some examples, the method 1200 includes computing a composite risk score for the part identifier (at block 1212), wherein the electronic notification is generated and transmitted based at least in part on the composite risk score. The composite risk score may computed by applying a plurality of weighted factors to: (i) environmental conditions at an installation site of the part, (ii) operational runtime hours per week and process criticality metrics for the part, (iii) a failure trend for the part, (iv) a manufacturer-provided mean time between failure (MTBF) data for the part, and (v) the lifecycle information from the data feed, and, in some examples, the composite risk score may be dynamically updated risk score in response to new inputs related to any one of (i), (ii), (iii), (iv), and (v). After computing the composite risk score, the score can be compared to the alert threshold (e.g., per part, per facility, or per user) and the electronic notification can be generated and transmitted in response to the composite risk score satisfying the alert threshold. The composite risk score can also be used to generate various visualizations, such as, for example, a risk heat map. As described above, the composite risk score can also be used with one or more machine learning models to generate, for example, a failure prediction for the part, an anomaly detection for the part, or a schedule optimization for at least one of the first replacement data and the second replacement data, wherein the machine learning model receives, as inputs, the lifecycle information and the composite risk score. The one or more machine learning models can also be retrained using, for example, actual repair data for the part to further optimize and improve the model for subsequent use.

In some examples, the composite risk score can also be used to generate stocking level recommendations. For example, in response at least one of the lifecycle information and the composite risk score, a minimum and maximum stocking level recommendation can be generated based on an installed base of parts, on-site inventory, and reserved spares.

With continued reference to FIG. 12, the method 1200 may also include generating the consolidated graphical user interface including the list of replacement options (e.g., in response to selection of the selectable mechanism or navigation to the graphical user interface within a software application) (at block 1214). Generating the consolidated graphical user interface may include accessing, from the non-transitory computer readable medium, first replacement data for the part identifier (at block 1216), and receiving, through a plurality of application programming interfaces (API), second replacement data for the part identifier from a plurality of third-party providers (at block 1218). Accordingly, the list of replacement options included in the graphical user interface may include the first replacement data and the second replacement data, wherein the first replacement data is accessed from a proprietary (internal to the system 100) database including a plurality (e.g., more than 30 million) SKUs for new parts, new surplus parts, surplus parts in non-original packaging, and refurbished parts. In contrast, the second replacement data may be accessed from a third-party data feed.

In some examples, the method 1200 also includes, in response to input received within the consolidated graphical user interface, generating and submitting, via a plurality of data communication channels, a request for a quote for a replacement option (at block 1220). For example, as described above, the system 100 may integrate an e-commerce application to enable an end user to submit a request for quotes or purchase parts directly within the system 100, which streamlines online purchases without wasting computing and networking resources requiring that a user navigate to a different website or application, which can also introduce human error.

As described herein, the method 1200 may also include generate one or more visualizations as part of or accessing through the consolidated graphical user interface. For example, the method 1200 may include identifying, via a user table, a plurality of facilities associated with a user identifier, generating and providing an interactive map, wherein the interactive map includes a selectable icon for each of the plurality of facilities (see, e.g., FIGS. 5A and 5B). In response to receiving a selection of the selectable icon for at least one of the plurality of facilities, the method 1200 can further include accessing, from non-transitory computer readable medium (e.g., the memory 220), a parts record associated with the at least one of the plurality of facilities, the parts record including a plurality of part identifiers and, for each respective part identifier of the plurality of part identifiers, a respective lifecycle status, and updating a graphical chart based on the parts record associated with the at least of the plurality of facilities. The graphical chart may represent the respective lifecycle status of each of the plurality of part identifiers.

Alternatively or in addition, the method 1200 may include generating a list of installed parts associated with a plurality of facilities and providing the list of installed parts within a second graphical user interface (see, e.g., FIGS. 6A, 6B, 6C, and 6D). The second graphical user interface may include at least one selection mechanism for filtering the list of installed parts based on at least on selected from a group consisting of part identifier, manufacturer, replacement complexity, lifecycle status, and location.

Alternatively or in addition, the method 1200 may include generating a lifecycle status forecast for the part identifier for each of a plurality of time periods and providing a visualization of the lifecycle status forecast (see, e.g., FIGS. 6A, 6B, 6C, and 6D). The lifecycle status forecast can be provided within the consolidated graphical user interface or a separate user interface.

It should be understood that the visualizations described with respect to the method 1200 may be generated in various orders based on, for example, how an end user navigates through the system and the visualizations may be re-generated (updated) periodically to provide current information to the end user.

The following paragraphs provide various examples disclosed herein.

Example 1. A system for industrial parts tracking, the system comprising: non-transitory computer readable medium storing instructions; and an electronic processor configured to execute the instructions to: receive condition monitoring information generated via a sensor, the condition monitoring information associated with a part identifier representing a part installed in a facility, receive, through an application programming interface (API), a data feed including lifecycle information, the lifecycle information including a lifecycle status for the part identifier, access, from the non-transitory computer readable medium, inventory information for the part identifier, access, from the non-transitory computer readable medium, an alert threshold, and based on the condition monitoring information generated via the sensor, the lifecycle information received via the data feed, the inventory information, and the alert threshold, generate and transmit an electronic notification, the electronic notification including a selectable mechanism for accessing, within a consolidated graphical user interface, a list of replacement options for the part; the electronic processor configured to generate the consolidated graphical user interface including the list of replacement options by: accessing, from the non-transitory computer readable medium, first replacement data for the part identifier, and receiving, through a plurality of application programming interfaces (API), second replacement data for the part identifier from a plurality of third-party providers, wherein the list of replacement options includes the first replacement data and the second replacement data.

Example 2. The system of example 1, wherein the condition monitoring information includes at least one selected from a group consisting of temperature, vibration, a cycle count, and a failure rate.

Example 3. The system of any of examples 1-2, wherein the lifecycle status is selected from a set of statuses including active, end-of-life, and obsolete.

Example 4. The system of any of examples 1-3, wherein the electronic processor is configured to access the inventory information for the part identifier by accessing an inventory quantity of the part stored for each of a plurality of facilities.

Example 5. The system of any of examples 1-4, wherein the alert threshold is customizable for at least one selected from a group consisting of the part identifier, the facility, and an end user.

Example 6. The system of any of examples 1-5, wherein the electronic notification includes a notification to a software application installed on an end user device.

Example 7. The system of any of examples 1-6, wherein the electronic notification includes at least one selected from a group consisting of an email message, a text message, an instant message, and a voice message.

Example 8. The system of any of examples 1-7, wherein the electronic processor is further configured to: identify, via a user table, a plurality of facilities associated with a user identifier; generate and provide an interactive map, the interactive map including a selectable icon for each of the plurality of facilities; and in response to receiving a selection of the selectable icon for at least one of the plurality of facilities: access, from the non-transitory computer readable medium, a parts record associated with the at least one of the plurality of facilities, the parts record including a plurality of part identifiers and, for each respective part identifier of the plurality of part identifiers, a respective lifecycle status, and update a graphical chart based on the parts record associated with the at least of the plurality of facilities, the graphical chart representing the respective lifecycle status of each of the plurality of part identifiers.

Example 9. The system of any of examples 1-8, wherein the electronic processor is further configured to generate a list of installed parts associated with a plurality of facilities and provide the list of installed parts within a second graphical user interface, wherein the second graphical user interface includes at least one selection mechanism for filtering the list of installed parts, wherein filtering the list of installed parts includes filtering based on at least on selected from a group consisting of part identifier, manufacturer, replacement complexity, lifecycle status, and location.

Example 10. The system of any of examples 1-10, wherein the electronic processor is further configured to, in response to input received within the consolidated graphical user interface, generate and submit, via a plurality of data communication channels, a request for a quote for a replacement option.

Example 11. The system of any of examples 1-11, wherein the electronic processor is further configured to generate a lifecycle status forecast for the part identifier for each of a plurality of time periods and provide a visualization of the lifecycle status forecast.

Example 12. The system of example 11, wherein the electronic processor is further configured to provide the visualization within the consolidated graphical user interface.

Example 13. The system of any of examples 1-12, wherein the first replacement data accessed from the non-transitory computer readable medium includes replacement data for the part identifier accessed from an inventory including a plurality of SKUs for new parts, new surplus parts, surplus parts in non-original packaging, and refurbished parts.

Example 14. The system of any of examples 1-13, wherein the electronic processor is further configured to execute the instructions to: compute a composite risk score for the part identifier by applying a plurality of weighted factors to: (i) environmental conditions at an installation site of the part, (ii) operational runtime hours per week and process criticality metrics for the part, (iii) a failure trend for the part, (iv) a manufacturer-provided mean time between failure (MTBF) data for the part, and (v) the lifecycle information from the data feed; and dynamically update the composite risk score in response to new inputs related to any one of (i), (ii), (iii), (iv), and (v), wherein the electronic processor is configured to generate and transmit the electronic notification based at least in part on the composite risk score.

Example 15. The system of example 14, wherein the electronic processor is configured to generate and transmit the electronic notification based at least in part on the composite risk score by comparing the composite risk score to the alert threshold, wherein the alert threshold is adjustable per part, per facility, or per user.

Example 16. The system of example 14, wherein electronic processor is configured to generate a risk heat map based on the composite risk score.

Example 17. The system of any of examples 1-16, wherein the condition monitoring information generated via the sensor is selectively used to generate and transmit the electronic notification in response to opt-in or verification of installation of the sensor.

Example 18. The system of example 14, wherein electronic processor is further configured to execute the instructions to: use a machine learning model to generate at least one selected from a group consisting of a failure prediction for the part, an anomaly detection for the part, and a schedule optimization for at least one of the first replacement data and the second replacement data, wherein the machine learning model receives, as inputs, the lifecycle information and the composite risk score.

Example 19. The system of example 18, wherein the electronic processor is further configured to execute the instructions to retrain the machine learning model using actual repair data for the part.

Example 20. The system of example 14, wherein the electronic processor is further configured to execute the instructions to: in response at least one of the lifecycle information and the composite risk score, generate a minimum and maximum stocking level recommendation based on an installed base of parts, on-site inventory, and reserved spares.

Example 21. A method for industrial parts tracking, the system method comprising: receiving condition monitoring information generated via a sensor, the condition monitoring information associated with a part identifier representing a part installed in a facility, and receiving, through an application programming interface (API), a data feed including lifecycle information, the lifecycle information including a lifecycle status for the part identifier, accessing, from the non-transitory computer readable medium, inventory information for the part identifier, accessing, from the non-transitory computer readable medium, an alert threshold, and, based on the condition monitoring information generated via the sensor, the lifecycle information received via the data feed, the inventory information, and the alert threshold, generating and transmitting an electronic notification, the electronic notification including a selectable mechanism for accessing, within a consolidated graphical user interface, a list of replacement options for the part; the method further comprising generating the consolidated graphical user interface including the list of replacement options by: accessing, from the non-transitory computer readable medium, first replacement data for the part identifier, and receiving, through a plurality of application programming interfaces (API), second replacement data for the part identifier from a plurality of third-party providers, wherein the list of replacement options includes the first replacement data and the second replacement data.

Example 22. The method of example 21 including the functionality of any of examples 2-20.

Example 23: Non-transitory computer readable medium storing instructions executable by one or more electronic processors to perform a set of functions including the method of any of examples 21-22.

In the foregoing description, various examples, examples, aspects, and features have been described. However, one of ordinary skill in the art appreciates that various modifications and changes can be made without departing from the scope of the invention as set forth in the claims below. Accordingly, the specification and figures are to be regarded in an illustrative rather than a restrictive sense, and all such modifications are intended to be included within the scope of the present teachings.

The benefits, advantages, solutions to problems, and any element(s) that may cause any benefit, advantage, or solution to occur or become more pronounced are not to be construed as a critical, required, or essential features or elements of any or all the claims. The invention is defined solely by the appended claims including any amendments made during the pendency of this application and all equivalents of those claims as issued.

Moreover, in this document, relational terms such as first and second, top and bottom, and the like may be used solely to distinguish one entity or action from another entity or action without necessarily requiring or implying any actual such relationship or order between such entities or actions. The terms "comprises," "comprising," "has," "having," "includes," "including," "contains," "containing," or any other variation thereof, are intended to cover a non-exclusive inclusion, such that a process, method, article, or apparatus that comprises, has, includes, contains a list of elements does not include only those elements but may include other elements not expressly listed or inherent to such process, method, article, or apparatus. An element proceeded by "comprises ...a," "has ...a," "includes ...a," or "contains ...a" does not, without more constraints, preclude the existence of additional identical elements in the process, method, article, or apparatus that comprises, has, includes, contains the element. The terms "a" and "an" are defined as one or more unless explicitly stated otherwise herein. The terms "substantially," "essentially," "approximately," "about," or any other version thereof, are defined as being close to as understood by one of ordinary skill in the art, and in one non-limiting example the term is defined to be within 10%, in another example within 5%, in another example within 1% and in another example within 0.5%. The term "coupled" as used herein is defined as connected, although not necessarily directly and not necessarily mechanically. A device or structure that is "configured" in a certain way is configured in at least that way but may also be configured in ways that are not listed.

It will be appreciated that some examples may be comprised of one or more generic or specialized electronic processors (or "processing devices") such as microprocessors, digital signal processors, customized processors and field programmable gate arrays (FPGAs) and unique stored program instructions (including both software and firmware) that control the one or more processors to implement, in conjunction with certain non-processor circuits, some, most, or all of the functions of the method and/or apparatus described herein. Alternatively, some or all functions could be implemented by a state machine that has no stored program instructions, or in one or more application specific integrated circuits (ASICs), in which each function or some combinations of certain of the functions are implemented as custom logic. Of course, a combination of the two approaches could be used.

Moreover, an example can be implemented as a computer-readable storage medium having computer readable code stored thereon for programming a computer (for example, comprising a processor) to perform a method as described and claimed herein. Examples of such computer-readable storage mediums include, but are not limited to, a hard disk, a CD-ROM, an optical storage device, a magnetic storage device, a ROM (Read Only Memory), a PROM (Programmable Read Only Memory), an EPROM (Erasable Programmable Read Only Memory), an EEPROM (Electrically Erasable Programmable Read Only Memory) and a Flash memory. Further, it is expected that one of ordinary skill, notwithstanding possibly significant effort and many design choices motivated by, for example, available time, current technology, and economic considerations, when guided by the concepts and principles disclosed herein will be readily capable of generating such software instructions and programs and ICs with minimal experimentation.

In the foregoing specification, specific examples have been described. However, one of ordinary skill in the art appreciates that various modifications and changes can be made without departing from the scope of the invention as set forth in the claims below. Accordingly, the specification and figures are to be regarded in an illustrative rather than a restrictive sense, and all such modifications are intended to be included within the scope of present teachings.

When used in this specification and claims, the terms "comprises" and "comprising" and variations thereof mean that the specified features, steps or integers are included. The terms are not to be interpreted to exclude the presence of other features, steps or components.

The invention may also broadly consist in the parts, elements, steps, examples and/or features referred to or indicated in the specification individually or collectively in any and all combinations of two or more said parts, elements, steps, examples and/or features. In particular, one or more features in any of the embodiments described herein may be combined with one or more features from any other embodiment(s) described herein.

Protection may be sought for any features disclosed in any one or more published documents referenced herein in combination with the present disclosure.

Although certain example embodiments of the invention have been described, the scope of the appended claims is not intended to be limited solely to these embodiments. The claims are to be construed literally, purposively, and/or to encompass equivalents.

Preferred features of the invention:
1. A system for industrial parts tracking, the system comprising:
   non-transitory computer readable medium storing instructions; and
   an electronic processor configured to execute the instructions to:
      receive condition monitoring information generated via a sensor, the condition monitoring information associated with a part identifier representing a part installed in a facility,
      receive, through an application programming interface (API), a data feed including lifecycle information, the lifecycle information including a lifecycle status for the part identifier,
      access, from the non-transitory computer readable medium, inventory information for the part identifier,
      access, from the non-transitory computer readable medium, an alert threshold, and
      based on the condition monitoring information generated via the sensor, the lifecycle information received via the data feed, the inventory information, and the alert threshold, generate and transmit an electronic notification, the electronic notification including a selectable mechanism for accessing, within a consolidated graphical user interface, a list of replacement options for the part;
      the electronic processor configured to generate the consolidated graphical user interface including the list of replacement options by:
         accessing, from the non-transitory computer readable medium, first replacement data for the part identifier, and
         receiving, through a plurality of application programming interfaces (API), second replacement data for the part identifier from a plurality of third-party providers,
         wherein the list of replacement options includes the first replacement data and the second replacement data.
2. The system of clause 1, wherein the condition monitoring information includes at least one selected from a group consisting of temperature, vibration, a cycle count, and a failure rate.
3. The system of clause 1, wherein the lifecycle status is selected from a set of statuses including active, end-of-life, and obsolete.
4. The system of clause 1, wherein the electronic processor is configured to access the inventory information for the part identifier by accessing an inventory quantity of the part stored for each of a plurality of facilities.
5. The system of clause 1, wherein the alert threshold is customizable for at least one selected from a group consisting of the part identifier, the facility, and an end user.
6. The system of clause 1, wherein the electronic notification includes a notification to a software application installed on an end user device.
7. The system of clause 1, wherein the electronic notification includes at least one selected from a group consisting of an email message, a text message, an instant message, and a voice message.
8. The system of clause 1, wherein the electronic processor is further configured to:
   identify, via a user table, a plurality of facilities associated with a user identifier;
      generate and provide an interactive map, the interactive map including a selectable icon for each of the plurality of facilities; and
   in response to receiving a selection of the selectable icon for at least one of the plurality of facilities:
      access, from the non-transitory computer readable medium, a parts record associated with the at least one of the plurality of facilities, the parts record including a plurality of part identifiers and, for each respective part identifier of the plurality of part identifiers, a respective lifecycle status, and
      update a graphical chart based on the parts record associated with the at least of the plurality of facilities, the graphical chart representing the respective lifecycle status of each of the plurality of part identifiers.
9. The system of clause 1, wherein the electronic processor is further configured to generate a list of installed parts associated with a plurality of facilities and provide the list of installed parts within a second graphical user interface, wherein the second graphical user interface includes at least one selection mechanism for filtering the list of installed parts, wherein filtering the list of installed parts includes filtering based on at least on selected from a group consisting of part identifier, manufacturer, replacement complexity, lifecycle status, and location.
10. The system of clause 1, wherein the electronic processor is further configured to, in response to input received within the consolidated graphical user interface, generate and submit, via a plurality of data communication channels, a request for a quote for a replacement option.
11. The system of clause 1, wherein the electronic processor is further configured to generate a lifecycle status forecast for the part identifier for each of a plurality of time periods and provide a visualization of the lifecycle status forecast.
12. The system of clause 11, wherein the electronic processor is further configured to provide the visualization within the consolidated graphical user interface.
13. The system of clause 1, wherein the first replacement data accessed from the non-transitory computer readable medium includes replacement data for the part identifier accessed from an inventory including a plurality of stock-keeping units (SKUs) for new parts, new surplus parts, surplus parts in non-original packaging, and refurbished parts.
14. The system of clause 1, wherein the electronic processor is further configured to execute the instructions to:
   compute a composite risk score for the part identifier by applying a plurality of weighted factors to: (i) environmental conditions at an installation site of the part, (ii) operational runtime hours per week and process criticality metrics for the part, (iii) a failure trend for the part, (iv) a manufacturer-provided mean time between failure (MTBF) data for the part, and (v) the lifecycle information from the data feed; and
   dynamically update the composite risk score in response to new inputs related to any one of (i), (ii), (iii), (iv), and (v),
   wherein the electronic processor is configured to generate and transmit the electronic notification based at least in part on the composite risk score.
15. The system of clause 14, wherein the electronic processor is configured to generate and transmit the electronic notification based at least in part on the composite risk score by comparing the composite risk score to the alert threshold, wherein the alert threshold is adjustable per part, per facility, or per user.
16. The system of clause 14, wherein electronic processor is configured to generate a risk heat map based on the composite risk score.
17. The system of clause 1, wherein the condition monitoring information generated via the sensor is selectively used to generate and transmit the electronic notification in response to opt-in or verification of installation of the sensor.
18. The system of clause 14, wherein electronic processor is further configured to execute the instructions to:
   use a machine learning model to generate at least one selected from a group consisting of a failure prediction for the part, an anomaly detection for the part, and a schedule optimization for at least one of the first replacement data and the second replacement data,
   wherein the machine learning model receives, as inputs, the lifecycle information and the composite risk score.
19. The system of clause 18, wherein the electronic processor is further configured to execute the instructions to retrain the machine learning model using actual repair data for the part.
20. The system of clause 14, wherein the electronic processor is further configured to execute the instructions to:
   in response at least one of the lifecycle information and the composite risk score, generate a minimum and maximum stocking level recommendation based on an installed base of parts, on-site inventory, and reserved spares.

## Claims

1. A system for industrial parts tracking, the system comprising:
non-transitory computer readable medium storing instructions; and
an electronic processor configured to execute the instructions to:
receive condition monitoring information generated via a sensor, the condition monitoring information associated with a part identifier representing a part installed in a facility,
receive, through an application programming interface (API), a data feed including lifecycle information, the lifecycle information including a lifecycle status for the part identifier,
access, from the non-transitory computer readable medium, inventory information for the part identifier,
access, from the non-transitory computer readable medium, an alert threshold, and
based on the condition monitoring information generated via the sensor, the lifecycle information received via the data feed, the inventory information, and the alert threshold, generate and transmit an electronic notification, the electronic notification including a selectable mechanism for accessing, within a consolidated graphical user interface, a list of replacement options for the part;
the electronic processor configured to generate the consolidated graphical user interface including the list of replacement options by:
accessing, from the non-transitory computer readable medium, first replacement data for the part identifier, and
receiving, through a plurality of application programming interfaces (API), second replacement data for the part identifier from a plurality of third-party providers,
wherein the list of replacement options includes the first replacement data and the second replacement data.

2. The system of claim 1, wherein the condition monitoring information includes at least one selected from a group consisting of temperature, vibration, a cycle count, and a failure rate.

3. The system of claim 1 or 2, wherein the lifecycle status is selected from a set of statuses including active, end-of-life, and obsolete, or wherein the electronic processor is configured to access the inventory information for the part identifier by accessing an inventory quantity of the part stored for each of a plurality of facilities.

4. The system of any preceding claim, wherein the alert threshold is customizable for at least one selected from a group consisting of the part identifier, the facility, and an end user, or wherein the electronic notification includes a notification to a software application installed on an end user device.

5. The system of any preceding claim, wherein the electronic notification includes at least one selected from a group consisting of an email message, a text message, an instant message, and a voice message.

6. The system of any preceding claim, wherein the electronic processor is further configured to:
identify, via a user table, a plurality of facilities associated with a user identifier;
generate and provide an interactive map, the interactive map including a selectable icon for each of the plurality of facilities; and
in response to receiving a selection of the selectable icon for at least one of the plurality of facilities:
access, from the non-transitory computer readable medium, a parts record associated with the at least one of the plurality of facilities, the parts record including a plurality of part identifiers and, for each respective part identifier of the plurality of part identifiers, a respective lifecycle status, and
update a graphical chart based on the parts record associated with the at least of the plurality of facilities, the graphical chart representing the respective lifecycle status of each of the plurality of part identifiers.

7. The system of any preceding claim, wherein the electronic processor is further configured to generate a list of installed parts associated with a plurality of facilities and provide the list of installed parts within a second graphical user interface, wherein the second graphical user interface includes at least one selection mechanism for filtering the list of installed parts, wherein filtering the list of installed parts includes filtering based on at least on selected from a group consisting of part identifier, manufacturer, replacement complexity, lifecycle status, and location.

8. The system of any preceding claim, wherein the electronic processor is further configured to, in response to input received within the consolidated graphical user interface, generate and submit, via a plurality of data communication channels, a request for a quote for a replacement option.

9. The system of any preceding claim, wherein the electronic processor is further configured to generate a lifecycle status forecast for the part identifier for each of a plurality of time periods and provide a visualization of the lifecycle status forecast, and preferably wherein the electronic processor is further configured to provide the visualization within the consolidated graphical user interface.

10. The system of any preceding claim, wherein the first replacement data accessed from the non-transitory computer readable medium includes replacement data for the part identifier accessed from an inventory including a plurality of stock-keeping units (SKUs) for new parts, new surplus parts, surplus parts in non-original packaging, and refurbished parts.

11. The system of any preceding claim, wherein the electronic processor is further configured to execute the instructions to:
compute a composite risk score for the part identifier by applying a plurality of weighted factors to: (i) environmental conditions at an installation site of the part, (ii) operational runtime hours per week and process criticality metrics for the part, (iii) a failure trend for the part, (iv) a manufacturer-provided mean time between failure (MTBF) data for the part, and (v) the lifecycle information from the data feed; and
dynamically update the composite risk score in response to new inputs related to any one of (i), (ii), (iii), (iv), and (v),
wherein the electronic processor is configured to generate and transmit the electronic notification based at least in part on the composite risk score.

12. The system of claim 11, wherein the electronic processor is configured to generate and transmit the electronic notification based at least in part on the composite risk score by comparing the composite risk score to the alert threshold, wherein the alert threshold is adjustable per part, per facility, or per user, or wherein electronic processor is configured to generate a risk heat map based on the composite risk score.

13. The system of any preceding claim, wherein the condition monitoring information generated via the sensor is selectively used to generate and transmit the electronic notification in response to opt-in or verification of installation of the sensor.

14. The system of claim 11 or 12, wherein electronic processor is further configured to execute the instructions to:
use a machine learning model to generate at least one selected from a group consisting of a failure prediction for the part, an anomaly detection for the part, and a schedule optimization for at least one of the first replacement data and the second replacement data,
wherein the machine learning model receives, as inputs, the lifecycle information and the composite risk score, and preferably wherein the electronic processor is further configured to execute the instructions to retrain the machine learning model using actual repair data for the part.

15. The system of claim 11, wherein the electronic processor is further configured to execute the instructions to: in response at least one of the lifecycle information and the composite risk score, generate a minimum and maximum stocking level recommendation based on an installed base of parts, on-site inventory, and reserved spares.
